(19) **Europäisches Patentamt / European Patent Office / Office européen des brevets**

(11) **EP 4 169 739 B1**

(12) **EUROPEAN PATENT SPECIFICATION**

(45) Date of publication and mention
of the grant of the patent:
**31.07.2024 Bulletin 2024/31**

(21) Application number: **22191599.4**

(22) Date of filing: **23.08.2022**

(51) International Patent Classification (IPC):
***B60C 11/03*** *(2006.01)* ***B60C 11/00*** *(2006.01)*

(52) Cooperative Patent Classification (CPC):
**B60C 11/033; B60C 11/0306; B60C 11/0309;**
B60C 1/0016; B60C 11/032; B60C 2011/0025;
B60C 2011/0344; B60C 2011/0353;
B60C 2011/0355; B60C 2011/0381; Y02T 10/86

(54) **TIRE**

REIFEN

PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.10.2021 JP 2021173168**

(43) Date of publication of application:
**26.04.2023 Bulletin 2023/17**

(73) Proprietor: **Sumitomo Rubber Industries, Ltd.
Kobe-shi, Hyogo-ken 651-0072 (JP)**

(72) Inventor: **YAMAMOTO, Keisuke
Kobe-shi, 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**EP-A1- 3 719 067      US-A1- 2014 200 321
US-A1- 2014 283 966      US-A1- 2016 089 938
US-A1- 2016 090 474      US-A1- 2018 291 188**

**Description**

TECHNICAL FIELD

The present invention relates to a tire.

BACKGROUND OF THE INVENTION

A pneumatic tire has been required to have a high grip performance from an initial stage of running and to exhibit a good grip performance (peak grip performance) when the tire warms up. JP 2012-158662 A discloses a rubber composition for tire tread comprising a specific carbon black and is good in grip performance and peak grip performance from the initial stage of running. A tire according to the preamble of claim 1 is known from US 2014/0283966 A1.

SUMMARY OF THE INVENTION

An object of the present invention is to provide a tire having improved overall performance of an initial grip performance and a peak grip performance on a dry road surface.

As a result of intensive studies, it has been found that the above-described problem can be solved by setting a land ratio on a grounding surface of a tread part and an average value of a loss tangent tan $\delta$ of a tread rubber in a specific temperature region within a predetermined range.

That is, the present invention relates to a tire comprising a tread part, the tread part having two or more circumferential grooves extending continuously in a tire circumferential direction, a pair of shoulder land parts partitioned by the circumferential grooves and grounding ends, a center land part located between the pair of shoulder land parts, and width direction grooves, wherein a land ratio R on a grounding surface of the tread part is 0.50 to 0.80, the land ratio R being a ratio of a total area of a grounding surface to a total surface area of a tread surface under the assumption that all the grooves are filled when a standardized load is applied to a tire in a standardized state and the tire is grounded on a flat surface at a camber angle of 0 degree, wherein the tread part has at least one rubber layer consisting of a rubber composition comprising a rubber component, and wherein an average value tan $\delta$A of a loss tangent tan $\delta$ of the rubber composition at -15°C to 20°C, obtained by measuring a tan $\delta$ at each temperature from -15°C to 20°C in 5°C increments under a condition of a frequency of 10 Hz, an initial strain of 0.1 %, and a dynamic strain amplitude of $\pm$ 0.25%, and calculating an average value of eight numerical values obtained, is 0.40 to 0.60.

According to the present invention, a tire having improved overall performance of an initial grip performance and a peak grip performance on a dry road surface is provided.

BRIEF DESCRIPTION OF THE DRAWINGS

FIG. 1 is a schematic view of a grounding surface of a tire when a tread is pressed against a flat surface.
FIG. 2 is an enlarged cross-sectional view schematically showing a part of a tread of a tire according to one embodiment of the present invention.

DETAILED DESCRIPTION

The tire which is one embodiment of the present invention is a tire comprising a tread part, the tread part having two or more circumferential grooves extending continuously in a tire circumferential direction, a pair of shoulder land parts partitioned by the circumferential grooves and grounding ends, a center land part located between the pair of shoulder land parts, and width direction grooves, wherein a land ratio R on a grounding surface of the tread part is 0.50 to 0.80, the land ratio R being a ratio of a total area of a grounding surface to a total surface area of a tread surface under the assumption that all the grooves are filled when a standardized load is applied to a tire in a standardized state and the tire is grounded on a flat surface at a camber angle of 0 degree, wherein the tread part has at least one rubber layer consisting of a rubber composition comprising a rubber component, and wherein an average value tan $\delta$A of a loss tangent tan $\delta$ of the rubber composition at - 15°C to 20°C, obtained by measuring a tan $\delta$ at each temperature from -15°C to 20°C in 5°C increments under a condition of a frequency of 10 Hz, an initial strain of 0.1 %, and a dynamic strain amplitude of $\pm$ 0.25%, and calculating an average value of eight numerical values obtained, is 0.40 to 0.60.

When the land ratio on the grounding surface of the tread part and the average value of the loss tangent tan $\delta$ of the tread rubber in the specific temperature region satisfy the above-described requirements, the obtained tire has improved overall performance of an initial grip performance and a peak grip performance on a dry road surface. The reason for that is not intended to be bound by theory, but can be considered as follows.

In order to improve grip performance during cornering, it is considered necessary to increase a grounding area of the tread and increase heat generation of the tread part. However, if the land ratio of the tread part is too large, the rubber of the tread part cannot be sufficiently deformed, and heat generation is less likely to occur, and therefore there is a concern that the grip performance may contrarily deteriorate. Since the tread part is cold particularly at the initial stage of running, the rubber is further less likely to be deformed. The tire of the present invention has the following features: (1) deformation can be more easily generated from an edge part of a groove of the tread part by setting the land ratio to 80% or less, and (2) heat generation of the tread surface can be secured from the initial stage of running by setting a tan $\delta$A in a temperature range corresponding to a tire temperature within a predetermined range. In addition, it is considered that, with cooperation of these features, a notable effect of improving the overall performance of the initial grip performance and the peak grip performance is achieved.

Tan $\delta$A and land ratio R preferably satisfy the following inequality (1):

$$\text{Inequality (1): } 0.21 \leqq \tan \delta A \times R \leqq 0.45$$

By setting the product of tan $\delta$A and land ratio R within the above-described range, the tread rubber can secure good rigidity and grounding area, and also, heat generation improves, so that it is considered that the grip performance can be further improved.

The above-described rubber component preferably comprises at least one of an isoprene-based rubber and a butadiene rubber.

By using a rubber component having good low temperature characteristics such as an isoprene-based rubber and a butadiene rubber, the rubber composition can be easily deformed even at a low temperature, and it is considered that a good initial grip performance becomes easily obtained.

In the tire of the present invention, it is preferable that a length of at least one land part in a tire width direction increases gradually from an outside toward an inside in a tire radial direction. Moreover, when a groove width on the tread surface of the circumferential groove placed outermost when mounted on a vehicle is defined as $L_0$, and a groove width at 95% position of the deepest part of the groove bottom of the circumferential groove placed outermost when mounted on the vehicle is defined as $L_{95}$, $L_{95}/L_0$ is preferably 0.10 to 0.50.

By providing the groove width of the circumferential groove so as to decrease gradually from the outside toward the inside in the tire radial direction, the tread land part becomes easily deformed, allowing for heat generation to easily occur in the entire land part. In addition, the area of the bottom surface of the land part becomes large, and therefore a reaction force can also be increased when a steering angle is set. Because of this, a large reaction force can be generated against a grip generated on the tread surface, and it is considered that the initial grip performance and the peak grip performance can be improved.

It is preferable that tan $\delta$A and $L_{95}/L_0$ satisfy the following inequality (2):

$$\text{Inequality (2): } \tan \delta A/(L_{95}/L_0) \geqq 1.20$$

By setting a ratio of tan $\delta$A to $L_{95}/L_0$ within the above-described range, the entire tread land part becomes easy to generate heat, and it is considered that good initial grip performance and peak grip performance become easily obtained.

The above-described rubber composition preferably comprises 5 to 50 parts by mass of a resin component and/or an ester-based plasticizer based on 100 parts by mass of the rubber component.

It is considered that, by compounding a resin component and/or an ester-based plasticizer in the rubber composition, the initial grip performance and the peak grip performance can be improved with a good balance.

The above-described rubber composition preferably comprises 5 to 150 parts by mass of carbon black having an average primary particle size of 25 nm or less based on 100 parts by mass of the rubber component.

By compounding such carbon black having a small particle in the rubber composition, the heat generation is improved, and it is considered that the peak grip performance is further improved.

The above-described rubber composition preferably comprises 1 to 10 parts by mass of an organic cross-linking agent based on 100 parts by mass of the rubber component.

When an organic cross-linking agent is compounded, a distance between cross-linking points becomes longer than that of cross-linking with sulfur, allowing for a large amount of energy loss to be generated, and therefore it is considered that a good peak grip performance can be obtained.

A tan $\delta$ of the above-described rubber composition at 30°C is preferably 0.35 or more.

It is considered that the grip performance can be further improved by setting the tan $\delta$ of the rubber composition at 30°C within the above-described range.

The complex elastic modulus of the rubber composition at 30°C is preferably 50 MPa or less.

By setting the complex elastic modulus of the rubber composition at 30°C within the above-described range, the heat generation of the rubber becomes high, and heat generation on the tread surface can be secured from the initial stage of running, so that it is considered that the initial grip performance can be improved.

The glass transition temperature of the above-described rubber composition is preferably -25°C or higher.

It is considered that, by setting the glass transition temperature of the rubber composition within the above-described range, an energy loss corresponding to frequency of vibration generated at rolling during normal running can be increased.

In the tire of the present invention, it is preferable that a ratio of a total area of the circumferential grooves to a grounding area of the tread part is 0.12 to 0.28 and that a ratio of a total area of the width direction grooves to the grounding area of the tread part is 0.08 to 0.20.

It is considered that, by setting the area ratios of the circumferential grooves and the width direction grooves within the above-described ranges, the grip performance during cornering can be improved with deformation of an edge part of the tread surface.

In the tire of the present invention, a ratio of a total area of the center land part to the grounding area of the tread part is preferably 0.30 to 0.65.

By setting the area ratio of the center land part within the above-described range, rigidity on the tread surface can be secured, so that the rubber can maintain its appropriate hardness against heat generation due to an edge component, and it is considered that deceleration becomes easy to occur during braking.

In the tire of the present invention, it is preferable that an area ratio of the width direction groove and the sipe in the shoulder land part is larger than an area ratio of the width direction groove and the sipe in the center land part.

By making a groove area ratio in the shoulder land part larger than a groove area ratio in the center land part, the shoulder land part becomes easily deformed during cornering, and it is considered that the peak grip performance is further improved.

<Definition>

A "standardized rim" is a rim defined for each tire in a standard system including a standard, on which the tire is based, by the standard, i.e., a "standard rim" in JATMA, "Design Rim" in TRA, or "Measuring Rim" in ETRTO.

A "standardized internal pressure" is an air pressure defined for each tire in a standard system including a standard on, which the tire is based, by the standard, i.e., a "maximum air pressure" in JATMA, a maximum value described in Table "TIRE LOAD LIMITS AT VARIOUS COLD INFLATION PRESSURES" in TRA, or "INFLATION PRESSURE" in ETRTO.

The "standardized state" is a state where the tire is rim-assembled on a standardized rim, a standardized internal pressure is filled, and no load is applied. Besides, in the present specification, a dimension of each part of a tire is measured in the above-described standardized state, unless otherwise specified.

A "standardized load" is a load defined for each tire in a standard system including a standard, on which the tire is based, by the standard, i.e., a "maximum load capacity" in JATMA, a maximum value described in Table "TIRE LOAD LIMITS AT VARIOUS COLD INFLATION PRESSURES" in TRA, or "LOAD CAPACITY" in ETRTO.

A "tread grounding end" is an outermost grounding position on an outer side in a tire width direction when a standardized load is applied to a tire in a standardized state and the tire is grounded on a flat surface at a camber angle of 0 degree.

The "land part" refers to a region partitioned by a plurality of circumferential grooves extending continuously to a tread grounding end and in a tire circumferential direction in a tread part. For example, when there are two circumferential grooves, the land part is divided into a pair of shoulder land parts and a center land part sandwiched therebetween, and when there are three circumferential grooves, the center land part is further divided into a land part located inside a vehicle and a land part located outside the vehicle when the tire being mounted on the vehicle.

The "circumferential groove" refers to a groove extending continuously in a tire circumferential direction and having a width of 7.0 mm or more on a tread surface 1.

The "width direction groove" refers to a groove extending in a tire width direction, one end or both ends of which do not communicate with the circumferential groove, and which has a groove width when a standardized load is applied to a tire in a standardized state and the tire is grounded on a flat surface at a camber angle of 0 degree.

The "Land ratio R" is a ratio of a total area of a grounding surface to a total surface area of a tread surface under the assumption that all the grooves are filled when a standardized load is applied to a tire in a standardized state and the tire is grounded on a flat surface at a camber angle of 0 degree. Here, all the grooves include grooves that do not correspond to the above-described circumferential grooves and width direction grooves (for example, a groove extending continuously in a tire circumferential direction and having a width of less than 7.0 mm on a tread surface, a groove extending in a tire width direction, which transverses a land part and both ends of which communicate with a circumferential groove, and the like).

The "area ratio of the width direction groove in the shoulder land part" refers to a total area of all the grooves crossing shoulder land parts with respect to a total area of the shoulder land parts. The "groove area ratio in the center land part" refers to a total area of all the grooves crossing center land parts with respect to a total area of the center land parts.

The "groove depth of the circumferential groove" is calculated by a distance between a tread surface and an extension line of a deepest part of a groove bottom of a circumferential groove. When there are a plurality of circumferential grooves, it is calculated by a distance between a tread surface and an extension line of a deepest part of a groove bottom of a circumferential groove having a deepest groove depth among the plurality of circumferential grooves.

An "oil content" also includes an amount of oil contained in the oil-extended rubber.

<Measuring method>

The "total area of the grounding surface", the "total area of the shoulder land parts", the "total area of the center land parts", and the groove area crossing these land parts are values calculated based on the grounding shape. The grounding shape can be obtained by mounting a tire on a standardized rim and holding a standardized internal pressure, and then applying an ink to, for example, a tread part, applying a standardized load to press the tread part vertically against a cardboard or the like and transferring the ink applied to the tread part. Moreover, from the obtained grounding shape, a sum of areas of the shoulder land parts in a state where all the grooves crossing the shoulder land parts are filled is defined as a total area of the shoulder land parts, and a sum of areas of the center land parts in a state where all the grooves crossing the center land parts are filled is defined as a total area of the center land parts.

The "30°C tan $\delta$" is a loss tangent measured under a condition of a temperature at 30°C, a frequency of 10 Hz, an initial strain of 5%, and a dynamic strain of 1%. A sample for loss tangent measurement is a vulcanized rubber composition with 20 mm in length $\times$ 4 mm in width $\times$ 1 mm in thickness. When it is produced by being cut out from a tire, it is cut out from a tread part of the tire so that a tire circumferential direction becomes a long side and a tire radial direction becomes a thickness direction.

The "30°C E*" is a complex elastic modulus (MPa) measured under a condition of a temperature at 30°C, a frequency of 10 Hz, an initial strain of 5%, and a dynamic strain of 1%. A sample for measuring the complex elastic modulus is produced in the similar manner as in the case for the 30°C tan $\delta$.

The "tan $\delta$A" can be obtained by measuring a tan $\delta$ at each temperature from -15°C to 20°C in 5°C increments under a condition of a frequency of 10 Hz, an initial strain of 0.1%, and a dynamic strain amplitude of $\pm$ 0.25%, and calculating an average value of eight numerical values obtained. A sample for measuring the tan $\delta$A is produced in the similar manner as in the case for the 30°C tan $\delta$.

The "glass transition temperature (Tg) of the rubber composition" is determined as a temperature corresponding to a largest tan $\delta$ value (tan $\delta$ peak temperature) in a temperature distribution curve of tan $\delta$ measured under a condition of a frequency of 10 Hz, an initial strain of 0.1%, a dynamic strain amplitude of $\pm$ 0.25%, and a temperature rising rate at 3°C/min, using EPLEXOR series manufactured by gabo Systemtechnik GmbH. A sample for measuring the Tg is produced in the similar manner as in the case for the 30°C tan $\delta$.

The "styrene content" is a value calculated by $^1$H-NMR measurement, and is applied to, for example, a rubber component having a repeating unit derived from styrene such as a SBR. The "vinyl content (1,2-bond butadiene unit amount)" is a value calculated by infrared absorption spectrometry according to JIS K 6239-2: 2017, and is applied to, for example, a rubber component having a repeating unit derived from butadiene such as a SBR and a BR. The "cis content (cis-1,4-bond butadiene unit amount)" is a value calculated by infrared absorption spectrometry according to JIS K 6239-2: 2017, and is applied to, for example, a rubber component having a repeating unit derived from butadiene such as a BR.

A "weight-average molecular weight (Mw)" can be calculated in terms of a standard polystyrene based on measurement values obtained by a gel permeation chromatography (GPC) (e.g., GPC-8000 Series manufactured by Tosoh Corporation, detector: differential refractometer, column: TSKGEL SUPERMULTIPORE HZ-M manufactured by Tosoh Corporation). For example, it is applied for a SBR, a BR, and the like.

The "average primary particle size of carbon black" can be calculated by observing carbon black with a transmission or scanning electron microscope, measuring 400 or more primary particles of carbon black observed in the field of view, and averaging them. A "$N_2$SA of carbon black" is measured according to JIS K 6217-2: 2017. An "oil absorption amount of carbon black (DBP oil absorption amount (OAN))" is measured according to JIS K 6217-4: 2017.

A "$N_2$SA of silica" is measured by the BET method according to ASTM D3037-93.

A "softening point of a resin component" is a temperature at which a sphere drops when the softening point specified in JIS K 6220-1: 2015 7.7 is measured with a ring and ball softening point measuring device.

A procedure for producing a tire that is one embodiment of the present invention will be described in detail below. However, the following descriptions are illustrative for explaining the present invention, and are not intended to limit the technical scope of the present invention to this description range only. Besides, in the present specification, a numerical range identified with "to" means to include the numerical values of both ends.

<Tire>

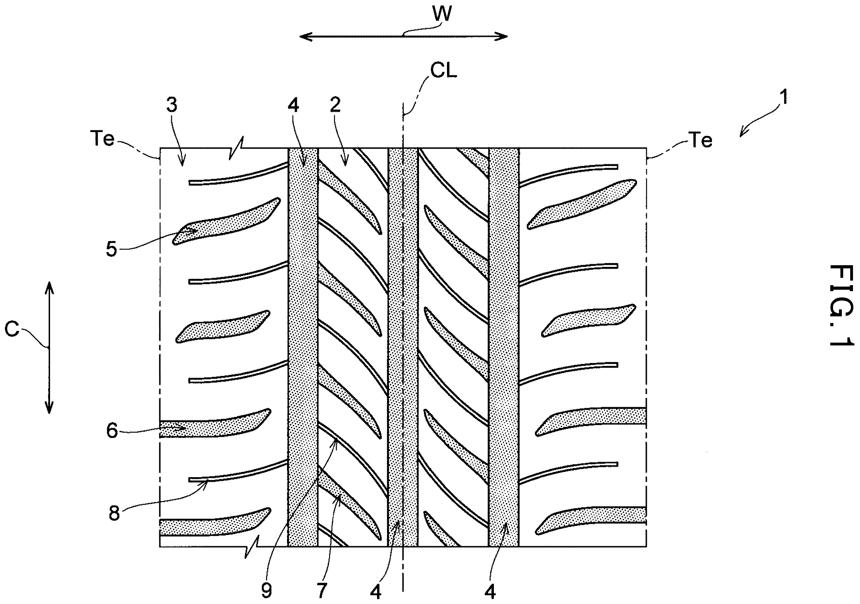

FIG. 1 is a schematic view of a grounding surface when a tread is pressed against a flat surface. A tread pattern is formed on a tread surface 1 of the tire according to the present invention.

In FIG. 1, the tread has a plurality of circumferential grooves 4. Although the circumferential groove 4 extends linearly along the circumferential direction C, it is not limited to such an embodiment, and may extend in, for example, a wavy shape, a sinusoidal shape, or a zigzag shape along the circumferential direction. In FIG. 1, three circumferential grooves 4 are provided, though in the present invention, the number of circumferential grooves is not particularly limited and may be, for example, two to five.

A shoulder land part 3 is a pair of land parts formed between the circumferential groove 4 and a tread end Te. A center land part 2 is a land part formed between a pair of shoulder land parts 3. In FIG. 1, two center land parts 2 are provided, though the number of center land parts is not particularly limited and may be, for example, one to five.

At least one of the land parts has a width direction groove, one end or both ends of which do not communicate with the circumferential groove 4, preferably a width direction groove, both ends of which do not communicate with the circumferential groove 4. In FIG. 1, the shoulder land part 3 is provided with a width direction groove 8, one end of which communicates with the circumferential groove 4, and width direction grooves 5 and 6, both ends of which do not communicate with the circumferential groove. Moreover, the center land part 2 is provided with a width direction groove 7, one end of which communicates with the circumferential groove 4, and a groove 9 extending in a tire width direction, which crosses the center land part 2 and both ends of which communicate with the circumferential groove, though the present invention is not limited to such aspects.

In the tire of the present invention, land ratio R on the grounding surface of the tread part is 0.50 or more, preferably 0.52 or more, more preferably 0.55 or more, further preferably 0.57 or more, particularly preferably 0.60 or more. When land ratio R is less than 0.50, the deformation of the tread part becomes large, and it is considered that the grip performance deteriorates. Moreover, as the grounding area decreases, the heat generation of the tread surface at the initial stage of running decreases, and the initial grip performance and abrasion resistance tend to decrease. On the other hand, land ratio R is 0.80 or less, preferably 0.77 or less, more preferably 0.75 or less, further preferably 0.72 or less, particularly preferably 0.70 or less. When land ratio R is more than 0.80, the rubber of the tread part cannot be sufficiently deformed and heat generation becomes less likely to occur, and therefore the grip performance tends to deteriorate.

A ratio of a total area of circumferential grooves to a grounding area of the tread part is preferably 0.12 or more, more preferably 0.14 or more, further preferably 0.16 or more. Moreover, the ratio of the total area of the circumferential grooves to the grounding area of the tread part is preferably 0.28 or less, more preferably 0.26 or less, further preferably 0.24 or less.

A ratio of a total area of width direction grooves to the grounding area of the tread part is preferably 0.08 or more, more preferably 0.10 or more, further preferably 0.12 or more. Moreover, a ratio of a total area of the width direction grooves and sipes 22, 23 to the grounding area of the tread part is preferably 0.20 or less, more preferably 0.18 or less, further preferably 0.16 or less.

A ratio of a total area of a center land part 2 to the grounding area of the tread part is preferably 0.30 or more, more preferably 0.35 or more, further preferably 0.40 or more. By setting a ratio of the total area of the center land part to a total area of land parts within the above-described ranges, the volume of the center land part can be increased and the rigidity of the land part can be increased, so that the rubber can maintain its appropriate hardness against heat generation due to an edge component, and it is considered that deceleration becomes easy to occur during braking. Moreover, the ratio of the total area of the center land part 2 to the total area of the land parts is preferably 0.65 or less, more preferably 0.60 or less, further preferably 0.55 or less, from the viewpoint of the effects of the present invention.

In the present invention, the tread part has at least one rubber layer. The tread part of the present invention may be a tread consisting of a single rubber layer, or may be a tread having a rubber layer whose outer surface forms a tread surface 1 (cap rubber layer) and one or more rubber layers present between the cap rubber layer and a belt layer. A thickness of the cap rubber layer with respect to a thickness of the entire tread part can be, for example, 30% or more, 40% or more, 50% or more, 60% or more, or 70% or more.

In the present invention, the thickness of the entire tread part is preferably 5.0 mm or more, more preferably 5.5 mm or more, further preferably 6.0 mm or more, particularly preferably 6.5 mm or more. Moreover, the thickness of the entire tread part is preferably 10.0 mm or less, more preferably 9.5 mm or less, further preferably 9.0 mm or less, particularly preferably 8.5 mm or less. Besides, the thickness of the entire tread part in the present invention means a total thickness of rubber layers forming the tread part, and is calculated by the shortest distance from the tread surface 1 to the belt layer.

A groove depth of the deepest part of the circumferential groove 4 is preferably 20% or more, more preferably 40% or more, further preferably 50% or more, particularly preferably 60% or more of the thickness of the entire tread part. Moreover, the groove depth of the deepest part of the circumferential groove 4 is preferably 95% or less, more preferably 90% or less, further preferably 85% or less, particularly preferably 80% or less of the thickness of the entire tread part.

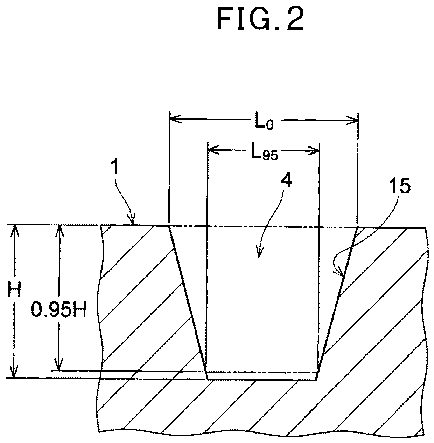

FIG. 2 is an enlarged cross-sectional view showing a part of the tread of the tire. In FIG. 2, a vertical direction is a tire radial direction, a horizontal direction is a tire width direction, and a direction perpendicular to a paper surface is a tire circumferential direction.

In the present invention, it is preferable that the length of at least one land part in the tire width direction increases gradually from the outside toward the inside in the tire radial direction. This allows for the land part to become easily deformed and for heat generation to easily occur in the entire land part. In addition, the area of the bottom surface of the land part becomes large, and therefore a reaction force can also be increased when a steering angle is set. Because of this, a large reaction force can be generated against a grip generated on the tread surface 1, and it is considered that the initial grip performance and the peak grip performance can be improved. Besides, a groove wall 15 of the circumferential groove of the present invention extends linearly from the outside to the inside in the tire radial direction, though the present invention is not limited to such an embodiment, and the groove wall may extend in, for example, a curved shape or a stepped shape.

A ratio of a groove width $L_{95}$ at 95% position of the deepest part of the groove bottom of the circumferential groove 4 to a groove width $L_0$ on the tread surface of the circumferential groove 4 placed outermost when mounted on a vehicle ($L_{95}/L_0$) is preferably 0.10 or more, more preferably 0.15 or more, further preferably 0.20 or more, further preferably 0.25 or more, particularly preferably 0.30 or more, from the viewpoint of the effects of the present invention. Moreover, $L_{95}/L_0$ is preferably 0.60 or less, more preferably 0.55 or less, further preferably 0.50 or less, further preferably 0.45 or less, particularly preferably 0.40 or less. Besides, illustration of each rubber layer is omitted in FIG. 2.

Tan $\delta A$ of the rubber composition of the present invention is 0.40 or more, preferably 0.41 or more, more preferably 0.43 or more, further preferably 0.45 or more, particularly preferably 0.47 or more, from the viewpoint of grip performance. Moreover, tan $\delta A$ of the rubber composition is 0.60 or less, preferably 0.58 or less, more preferably 0.56 or less, further preferably 0.54 or less, particularly preferably 0.52 or less, from the viewpoint of blow resistance.

30°C tan $\delta$ of the rubber composition of the present invention is preferably 0.32 or more, more preferably 0.35 or more, further preferably 0.37 or more, particularly preferably 0.40 or more, from the viewpoint of grip performance. Moreover, it is preferably 0.55 or less, more preferably 0.53 or less, further preferably 0.50 or less, particularly preferably 0.48 or less, from the viewpoint of blow resistance.

30°C E* of the rubber composition of the present invention is preferably 60 MPa or less, more preferably 56 MPa or less, further preferably 53 MPa or less, further preferably 50 MPa or less, particularly preferably 48 MPa or less, from the viewpoint of grip performance. Moreover, it is preferably 8 MPa or more, more preferably 9 MPa or more, further preferably 10 MPa or more, further preferably 12 MPa or more, further preferably 15 MPa or more, particularly preferably 20 MPa or more, from the viewpoint of steering stability.

Tg of the rubber composition of the present invention is preferably - 25°C or higher, more preferably -20°C or higher, further preferably -15°C or higher. By setting Tg of the rubber composition within the above-described ranges, the energy loss corresponding to frequency of vibration generated at rolling during normal running can be increased. Besides, an upper limit value of Tg of the rubber composition is, but not particularly limited to, preferably 20°C or lower, more preferably 15°C or lower, further preferably 10°C or lower.

Besides, tan $\delta A$, 30°C tan$\delta$, 30°C E*, and Tg of the rubber composition of the present invention can be appropriately adjusted depending on types and compounding amounts of rubber components, fillers, softening agents, etc. which will be described later.

The product of tan $\delta A$ and land ratio R as represented by the above-described inequality (1) is preferably 0.21 or more, more preferably 0.24 or more, further preferably 0.27 or more, particularly preferably 0.29 or more. By setting the product of tan $\delta A$ and land ratio R within the above-described range, the tread rubber can secure good rigidity and grounding area, and also, heat generation improves, so that it is considered that the grip performance can be further improved. Moreover, a product of tan $\delta A$ and land ratio R is preferably 0.45 or less, more preferably 0.42 or less, further preferably 0.39 or less, particularly preferably 0.36 or less, from the viewpoint of the effects of the present invention.

The ratio of tan $\delta A$ to $L_{95}/L_0$ (tan $\delta A/(L_{95}/L_0)$) as represented by the above-described inequality (2) is preferably 0.67 or more, more preferably 0.78 or more, further preferably 1.00 or more, further preferably 1.10 or more, further preferably 1.20 or more, particularly preferably 1.29 or more. By setting the product of tan $\delta A$ and land ratio R within the above-described ranges, the tread rubber can secure good rigidity and grounding area, and also heat generation improves, so that it is considered that the grip performance can be further improved. Moreover, tan $\delta A/(L_{95}/L_0)$ is preferably 5.00 or less, more preferably 4.00 or less, further preferably 3.00 or less, particularly preferably 2.00 or less, from the viewpoint of the effects of the present invention.

[Rubber composition]

In the tire of the present invention, the initial grip performance and the peak grip performance can be more effectively improved by cooperation of the above-mentioned tread pattern and the above-mentioned physical properties of the rubber composition. The rubber composition of the present invention is used for at least one rubber layer forming the tread part. Moreover, in a case of a tire comprising a tread part having two or more rubber layers, the rubber composition of the present invention is preferably used for any of rubber layers other than an innermost layer adjacent to an outer side of a belt layer in a tire radial direction, and it is more preferably used for a rubber layer whose outer surface forms a tread surface 1 (cap rubber layer).

<Rubber component>

In the rubber composition of the present invention, a diene-based rubber is appropriately used as a rubber component. A content of the diene-based rubber in the rubber component is preferably 80% by mass or more, more preferably 85% by mass or more, further preferably 90% by mass or more, particularly preferably 95% by mass or more, from the viewpoint of the effects of the present invention. Moreover, the rubber component may only consist of a diene-based rubber.

Examples of the diene-based rubber include, for example, an isoprene rubber, a butadiene rubber (BR), a styrene-butadiene rubber (SBR), a styrene-isoprene rubber (SIR), a styrene-isoprene-butadiene rubber (SIBR), a chloroprene rubber (CR), an acrylonitrile-butadiene rubber (NBR), and the like. These diene-based rubbers may be used alone, or two or more thereof may be used in combination. Among them, it is preferable to comprise at least one selected from a group consisting of an isoprene-based rubber, a BR, and a SBR, it is more preferable to comprise a SBR, and it is further preferable to comprise a SBR and at least one of an isoprene-based rubber and a BR. Moreover, the rubber component may consist of a SBR, or may consist of a SBR and a BR.

(Isoprene-based rubber)

Examples of the isoprene-based rubber include a natural rubber (NR), an isoprene rubber (IR), a purified NR, a modified NR, a modified IR, and the like. As the NR, those common in the tire industry such as, for example, SIR20, RSS#3, and TSR20 can be used. These isoprene-based rubbers may be used alone, or two or more thereof may be used in combination.

A content of the isoprene-based rubber when compounded in the rubber component is preferably 50% by mass or less, more preferably 40% by mass or less, further preferably 30% by mass or less, particularly preferably 20% by mass or less, from the viewpoint of peak grip performance. Moreover, a lower limit value of the content is not particularly limited, and can be, for example, 1% by mass or more, 3% by mass or more, 5% by mass or more, or 10% by mass or more, from the viewpoint of initial grip performance.

(BR)

The BR is not particularly limited, and those common in the tire industry can be used such as, for example, a BR having a cis content of less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). These BRs may be used alone, or two or more thereof may be used in combination. Besides, the cis content of the BR is measured by the above-described measuring method.

As the high cis BR, for example, those commercially available from Zeon Corporation, Ube Industries, Ltd., JSR Corporation, etc. can be used. When the high cis BR is compounded, low temperature characteristics and abrasion resistance can be improved. A cis content of the high cis BR is preferably 95 mol% or more, more preferably 96 mol% or more, further preferably 97 mol% or more, particularly preferably 98 mol% or more. Besides, the cis content of the BR is measured by the above-described measuring method.

A weight-average molecular weight (Mw) of the BR is preferably 300,000 or more, more preferably 350,000 or more, further preferably 400,000 or more, from the viewpoint of abrasion resistance. Moreover, it is preferably 2,000,000 or less, more preferably 1,500,000 or less, further preferably 1,000,000 or less, from the viewpoints of cross-linking uniformity and the like. Besides, the Mw of the BR is measured by the above-described measuring method.

A content of the BR when compounded in the rubber component is preferably 1% by mass or more, more preferably 3% by mass or more, further preferably 5% by mass or more, particularly preferably 10% by mass or more, from the viewpoint of initial grip performance. Moreover, the content of the BR is preferably 60% by mass or less, more preferably 50% by mass or less, further preferably 30% by mass or less, particularly preferably 15% by mass or less.

(SBR)

The SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Among them, a S-SBR and a modified SBR are preferable. Furthermore, hydrogenated ones of these SBRs (hydrogenated SBRs) and the like can also be used.

The SBRs listed above may be used alone, or two or more thereof may be used in combination. As the SBRs listed above, for example, those commercially available from Sumitomo Chemical Co., Ltd., JSR Corporation, Asahi Kasei Corporation, Zeon Corporation, ZS Elastomer Co., Ltd., etc. can be used.

A styrene content of the SBR is preferably 10% by mass or more, more preferably 15% by mass or more, further preferably 20% by mass or more, particularly preferably 25% by mass or more, from the viewpoints of peak grip performance and abrasion resistance. Moreover, it is preferably 60% by mass or less, more preferably 55% by mass or less, further preferably 50% by mass or less, from the viewpoints of temperature dependence of grip performance and blow resistance. Besides, the styrene content of the SBR is measured by the above-described measuring method.

A vinyl content of the SBR is preferably 10 mol% or more, more preferably 15 mol% or more, further preferably 20 mol% or more, from the viewpoints of ensuring reactivity with silica, peak grip performance, and abrasion resistance. Moreover, the vinyl content of the SBR is preferably 70 mol% or less, more preferably 65 mol% or less, further preferably 60 mol% or less, from the viewpoints of prevention of increase in temperature dependence, elongation at break, and abrasion resistance. Besides, the vinyl content of the SBR is measured by the above-described measuring method.

A weight-average molecular weight (Mw) of the SBR is preferably 200,000 or more, more preferably 250,000 or more, from the viewpoint of peak grip performance. Moreover, the weight-average molecular weight is preferably 2,000,000 or less, more preferably 1,800,000 or less, further preferably 1,500,000 or less, from the viewpoint of cross-linking uniformity. Besides, the weight-average molecular weight of the SBR is measured by the above-described measuring method.

A content of the SBR when compounded in the rubber component is preferably 30% by mass or more, more preferably 40% by mass or more, further preferably 50% by mass or more, particularly preferably 60% by mass or more, from the viewpoint of the effects of the present invention. Moreover, an upper limit value of the content of the SBR is not particularly limited, and can be, for example, 100% by mass, 95% by mass or less, 90% by mass or less, 85% by mass or less, or 80% by mass or less.

(Other rubber components)

The rubber component may comprise rubber components other than diene-based rubbers as long as they do not affect the effects of the present invention. As other rubber components, cross-linkable rubber components commonly used in the tire industry can be used, examples of which include, for example, a butyl rubber (IIR), a halogenated butyl rubber, an ethylene-propylene rubber, a polynorbornene rubber, a silicone rubber, a polyethylene chloride rubber, a fluorine rubber (FKM), an acrylic rubber (ACM), a hydrin rubber, and the like. These other rubber components may be used alone, or two or more thereof may be used in combination. Moreover, besides the above-described rubber components, the rubber component may or may not comprise a known thermoplastic elastomer.

<Filler>

The rubber composition of the present invention preferably comprises carbon black and/or silica as a filler, and more preferably comprises carbon black. Moreover, the filler may be a filler only consisting of carbon black and silica, or may be a filler only consisting of carbon black.

(Silica)

Silica is not particularly limited, and those common in the tire industry can be used, such as, for example, silica prepared by a dry process (anhydrous silica) and silica prepared by a wet process (hydrous silica). Among them, hydrous silica prepared by a wet process is preferable from the reason that it has many silanol groups. These silicas may be used alone, or two or more thereof may be used in combination.

A nitrogen adsorption specific surface area ($N_2SA$) of silica is preferably 100 $m^2/g$ or more, more preferably 120 $m^2/g$ or more, further preferably 140 $m^2/g$ or more, particularly preferably 150 $m^2/g$ or more, from the viewpoint of securing reinforcing property and peak grip performance. Moreover, it is preferably 350 $m^2/g$ or less, more preferably 300 $m^2/g$ or less, further preferably 250 $m^2/g$ or less, from the viewpoint of dispersibility. Besides, the $N_2SA$ of silica is

measured by the above-described measuring method.

A content of silica when compounded based on 100 parts by mass of the rubber component is preferably 30 parts by mass or more, more preferably 40 parts by mass or more, further preferably 50 parts by mass or more, particularly preferably 60 parts by mass or more, from the viewpoint of the effects of the present invention. Moreover, it is preferably 130 parts by mass or less, more preferably 120 parts by mass or less, further preferably 110 parts by mass or less, from the viewpoint of reducing the specific gravity of the rubber to reduce the weight.

(Carbon black)

Carbon black is not particularly limited, and, for example, those commonly used in the tire industry such as GPF, FEF, HAF, ISAF, and SAF can be used. These carbon black may be used alone, or two or more thereof may be used in combination.

An average primary particle size of carbon black is preferably 40 nm or less, more preferably 35 nm or less, further preferably 30 nm or less, further preferably 25 nm or less, further preferably 22 nm or less, particularly preferably 20 nm or less, from the viewpoints of reinforcing property and peak grip performance. Moreover, it is preferably 10 nm or more, more preferably 12 nm or more, further preferably 15 nm or more, from the viewpoint of dispersibility. Besides, the average primary particle size of carbon black is measured by the above-described measuring method.

A nitrogen adsorption specific surface area ($N_2SA$) of carbon black is preferably 50 $m^2$/g or more, more preferably 70 $m^2$/g or more, further preferably 100 $m^2$/g or more, particularly preferably 120 $m^2$/g or more, from the viewpoints of reinforcing property and peak grip performance. Moreover, it is preferably 250 $m^2$/g or less, more preferably 220 $m^2$/g or less, from the viewpoint of dispersibility. Besides, the $N_2SA$ of carbon black is measured by the above-described measuring method.

An oil absorption amount (DBP oil absorption amount (OAN)) of carbon black is preferably 85 mL/100 g or more, more preferably 90 mL/100 g or more, further preferably 100 mL/100 g or more, from the viewpoints of reinforcing property and peak grip performance. Moreover, the OAN is preferably 250 mL/100 g or less, more preferably 225 mL/100 g or less, further preferably 200 mL/100 g or less, from the viewpoint of grip performance. Besides, the OAN of carbon black is measured by the above-described measuring method.

A content of carbon black when compounded based on 100 parts by mass of the rubber component is preferably 1 part by mass or more, more preferably 3 parts by mass or more, further preferably 5 parts by mass or more, from the viewpoints of weather resistance and reinforcing property. Moreover, it is preferably 150 parts by mass or less, more preferably 140 parts by mass or less, further preferably 130 parts by mass or less, particularly preferably 120 parts by mass or less, from the viewpoint of fuel efficiency.

(Other fillers)

As fillers other than silica and carbon black, those commonly used in the tire industry can be compounded, such as aluminum hydroxide, calcium carbonate, alumina, clay, and talc.

A total content of fillers based on 100 parts by mass of the rubber component is preferably 40 parts by mass or more, more preferably 50 parts by mass or more, further preferably 60 parts by mass or more, particularly preferably 70 parts by mass or more, from the viewpoints of reinforcing property and grip performance. Moreover, it is preferably 150 parts by mass or less, more preferably 140 parts by mass or less, further preferably 130 parts by mass or less, particularly preferably 120 parts by mass or less, from the viewpoint of dispersibility.

(Silane coupling agent)

Silica is preferably used in combination with a silane coupling agent. The silane coupling agent is not particularly limited, and any silane coupling agent conventionally used in combination with silica in the tire industry can be used, examples of which include, for example, mercapto-based silane coupling agents such as 3-mercaptopropyltrimethoxysilane, 3-mercaptopropyltriethoxysilane, 2-mercaptoethyltrimethoxysilane, and 2-mercaptoethyltriethoxysilane; sulfide-based silane coupling agents such as bis(3-triethoxysilylpropyl)disulfide and bis(3-triethoxysilylpropyl)tetrasulfide; thioester-based silane coupling agents such as 3-octanoylthio-1-propyltriethoxysilane, 3-hexanoylthio-1-propyltriethoxysilane, and 3-octanoylthio-1-propyltrimethoxysilane; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycydoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; chloro-based silane coupling agents such as 3-chloropropyltrimethoxysilane and 3-chloropropyltriethoxysilane; and the like. Among them, sulfide-based silane coupling agents and/or mercapto-based silane coupling agents are preferably compounded. As the silane coupling agents, for example, those commercially available from Momentive Performance Materials, etc. can be used. These silane coupling agents may be used alone, or two or more thereof may be used in combination.

A total content of silane coupling agents when compounded based on 100 parts by mass of the rubber component is preferably 0.5 parts by mass or more, more preferably 1.0 part by mass or more, further preferably 2.0 parts by mass or more, particularly preferably 4.0 parts by mass or more, from the viewpoint of enhancing dispersibility of silica. Moreover, it is preferably 20 parts by mass or less, more preferably 15 parts by mass or less, further preferably 12 parts by mass or less, from the viewpoint of preventing deterioration of abrasion resistance.

A content of the silane coupling agent based on 100 parts by mass of silica is preferably 1.0 part by mass or more, more preferably 3.0 parts by mass or more, further preferably 5.0 parts by mass or more, from the viewpoint of enhancing dispersibility of silica. Moreover, it is preferably 20 parts by mass or less, more preferably 15 parts by mass or less, further preferably 12 parts by mass or less, from the viewpoints of cost and processability.

<Softening agent>

The rubber composition according to the present invention preferably comprises a softening agent. Examples of the softening agent include, for example, a resin component, oil, a liquid rubber, an ester-based plasticizer, and the like.

(Resin component)

The resin component is not particularly limited, examples of which include a petroleum resin, a terpene-based resin, a rosin-based resin, a phenol-based resin, and the like, which are commonly used in the tire industry. These resin components may be used alone, or two or more thereof may be used in combination.

In the present specification, a "C5-based petroleum resin" refers to a resin obtained by polymerizing a C5 fraction. Examples of the C5 fraction include, for example, a petroleum fraction having 4 to 5 carbon atoms such as cyclopentadiene, pentene, pentadiene, and isoprene. As the C5-based petroleum resin, a dicyclopentadiene resin (DCPD resin) is appropriately used.

In the present specification, an "aromatic-based petroleum resin" refers to a resin obtained by polymerizing a C9 fraction, and may be hydrogenated or modified. Examples of the C9 fraction include, for example, a petroleum fraction corresponding to 8 to 10 carbon atoms such as vinyltoluene, alkylstyrene, indene, and methyl indene. As specific examples of the aromatic-based petroleum resin, for example, a coumarone indene resin, a coumarone resin, an indene resin, and an aromatic vinyl-based resin are appropriately used. As the aromatic vinyl-based resin, a homopolymer of $\alpha$-methylstyrene or styrene or a copolymer of $\alpha$-methylstyrene and styrene is preferable, and a copolymer of $\alpha$-methylstyrene and styrene is more preferable, because it is economical, easy to process, and good in heat generation. As the aromatic vinyl-based resin, for example, those commercially available from Kraton Corporation, Eastman Chemical Company, etc. can be used.

In the present specification, a "C5-C9-based petroleum resin" refers to a resin obtained by copolymerizing the C5 fraction and the C9 fraction, and may be hydrogenated or modified. Examples of the C5 fraction and the C9 fraction include the above-described petroleum fractions. As the C5-C9-based petroleum resin, those commercially available from, for example, Tosoh Corporation, Zibo Luhua Hongjin New Material Co., Ltd., etc. can be appropriately used.

Examples of the terpene-based resin include a polyterpene resin consisting of at least one selected from terpene compounds such as $\alpha$-pinene, $\beta$-pinene, limonene, and a dipentene; an aromatic-modified terpene resin made from the terpene compound and an aromatic compound; a terpene phenol resin made from a terpene compound and a phenol-based compound; and those in which these terpene-based resins are hydrogenated (hydrogenated terpene-based resins). Examples of the aromatic compound used as a raw material for the aromatic-modified terpene resin include, for example, styrene, $\alpha$-methylstyrene, vinyltoluene, a divinyltoluene, and the like. Examples of the phenol-based compound used as a raw material for the terpene phenol resin include, for example, phenol, bisphenol A, cresol, xylenol, and the like.

Example of the rosin-based resin include, but not particularly limited to, for example, a natural resin rosin and a rosin-modified resin obtained by modifying it by hydrogenation, disproportionation, dimerization, esterification, or the like.

Examples of the phenol-based resin include, but not particularly limited to, a phenol formaldehyde resin, an alkylphenol formaldehyde resin, an alkylphenol acetylene resin, an oil-modified phenol formaldehyde resin, and the like.

A softening point of the resin component is preferably 60°C or higher, more preferably 70°C or higher, further preferably 80°C or higher, from the viewpoint of grip performance. Moreover, it is preferably 150°C or lower, more preferably 140°C or lower, further preferably 130°C or lower, from the viewpoints of processability and improvement in dispersibility of a rubber component and a filler. Besides, the softening point of the resin component is measured by the above-described measuring method.

A content of the resin component when compounded based on 100 parts by mass of the rubber component is preferably 3 parts by mass or more, more preferably 5 parts by mass or more, further preferably 10 parts by mass or more, particularly preferably 15 parts by mass or more, from the viewpoint of peak grip performance. Moreover, it is preferably 60 parts by mass or less, more preferably 50 parts by mass or less, further preferably 40 parts by mass or less, particularly preferably 35 parts by mass or less, from the viewpoint of processability.

(Oil)

Examples of oil include, for example, a process oil, vegetable fats and oils, animal fats and oils, and the like. Examples of the process oil include a paraffin-based process oil, a naphthene-based process oil, an aroma-based process oil, and the like. In addition, as an environmental measure, process oil having a low content of a polycyclic aromatic compound (PCA) can also be used. Examples of the process oil having a low content of a PCA include a mild extraction solution (MES), a treated distillate aromatic extract (TDAE), a heavy naphthenic oil, and the like.
A content of oil when compounded based on 100 parts by mass of the rubber component is preferably 5 parts by mass or more, more preferably 10 parts by mass or more, further preferably 15 parts by mass or more, from the viewpoint of processability. Moreover, it is preferably 100 parts by mass or less, more preferably 80 parts by mass or less, further preferably 60 parts by mass or less, from the viewpoint of abrasion resistance.

(Liquid rubber)

The liquid rubber is not particularly limited as long as it is a polymer in a liquid state at a normal temperature (25°C), examples of which include, for example, a liquid butadiene rubber (a liquid BR), a liquid styrene-butadiene rubber (a liquid SBR), a liquid isoprene rubber (a liquid IR), a liquid styrene-isoprene rubber (a liquid SIR), a liquid farnesene rubber, and the like. These liquid rubbers may be used alone, or two or more thereof may be used in combination.
A content of the liquid rubber when compounded based on 100 parts by mass of the rubber component is preferably 1 part by mass or more, more preferably 5 parts by mass or more, further preferably 10 parts by mass or more. Moreover, the content of the liquid rubber is preferably 50 parts by mass or less, more preferably 40 parts by mass or less, further preferably 30 parts by mass or less.

(Ester-based plasticizer)

Examples of the ester-based plasticizer include, for example, dibutyl adipate (DBA), diisobutyl adipate (DIBA), dioctyl adipate (DOA), bis(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. These ester-based plasticizers may be used alone, or two or more thereof may be used in combination.
A content of the ester-based plasticizer when compounded based on 100 parts by mass of the rubber component is preferably 1 part by mass or more, more preferably 5 parts by mass or more, further preferably 10 parts by mass or more, from the viewpoint of initial grip performance. Moreover, it is preferably 50 parts by mass or less, more preferably 40 parts by mass or less, further preferably 30 parts by mass or less, from the viewpoint of peak grip performance.
A total content of the resin component and the ester-based plasticizer based on 100 parts by mass of the rubber component is preferably 5 parts by mass or more, more preferably 10 parts by mass or more, further preferably 15 parts by mass or more, further preferably 20 parts by mass or more, particularly preferably 25 parts by mass or more. Moreover, the content is preferably 50 parts by mass or less, more preferably 45 parts by mass or less, further preferably 40 parts by mass or less, particularly preferably 35 parts by mass or less. By setting the total content of the resin component and the ester-based plasticizer within the above-described ranges, the initial grip performance and the peak grip performance can be improved with a good balance.
A content of the softening agent based on 100 parts by mass of the rubber component (a total amount of a plurality of softening agents when used in combination) is preferably 5 parts by mass or more, more preferably 10 parts by mass or more, further preferably 15 parts by mass or more, further preferably 20 parts by mass or more, particularly preferably 25 parts by mass or more, from the viewpoint of peak grip performance. Moreover, it is preferably 120 parts by mass or less, more preferably 100 parts by mass or less, further preferably 90 parts by mass or less, particularly preferably 80 parts by mass or less, from the viewpoint of processability.

(Other compounding agents)

The rubber composition according to the present invention can appropriately comprise compounding agents conventionally and commonly used in the tire industry, for example, wax, processing aid, an antioxidant, stearic acid, zinc oxide, a crosslinking agent, a vulcanization accelerator, and the like, in addition to the above-described components.

A content of wax when compounded based on 100 parts by mass of the rubber component is preferably 0.5 parts by mass or more, more preferably 1.0 part by mass or more, further preferably 1.5 parts by mass or more, from the viewpoint of weather resistance of a rubber. Moreover, it is preferably 10 parts by mass or less, more preferably 5.0 parts by mass or less, from the viewpoint of preventing whitening of a tire due to bloom.

Examples of the antioxidant include, but not particularly limited to, for example, amine-based, quinoline-based, quinone-based, phenol-based and imidazole-based compounds, and a carbamic acid metal salt, preferably, phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, and quinoline-based antioxidants such as 2,2,4-trimethyl-1,2-dihydroquinoline polymer and 6-ethoxy-2,2,4-trimethyl-1,2-dihydroquinoline. These antioxidants may be used alone, or two or more thereof may be used in combination.

A content of the antioxidant when compounded based on 100 parts by mass of the rubber component is preferably 0.5 parts by mass or more, more preferably 1.0 part by mass or more, further preferably 1.5 parts by mass or more, from the viewpoint of ozone crack resistance of a rubber. Moreover, it is preferably 10 parts by mass or less, more preferably 5.0 parts by mass or less, from the viewpoints of abrasion resistance and wet grip performance.

A content of stearic acid when compounded based on 100 parts by mass of the rubber component is preferably 0.5 parts by mass or more, more preferably 1.0 part by mass or more, further preferably 1.5 parts by mass or more, from the viewpoint of processability. Moreover, it is preferably 10 parts by mass or less, more preferably 5.0 parts by mass or less, from the viewpoint of vulcanization rate.

A content of zinc oxide when compounded based on 100 parts by mass of the rubber component is preferably 0.5 parts by mass or more, more preferably 1.0 part by mass or more, further preferably 1.5 parts by mass or more, from the viewpoint of processability. Moreover, it is preferably 10 parts by mass or less, more preferably 5.0 parts by mass or less, from the viewpoint of abrasion resistance.

Sulfur is appropriately used as a cross-linking agent. As sulfur, a powdery sulfur, oil a processing sulfur, a precipitated sulfur, a colloidal sulfur, an insoluble sulfur, a highly dispersible sulfur, and the like can be used.

A content of sulfur when compounded based on 100 parts by mass of the rubber component is preferably 0.1 parts by mass or more, more preferably 0.3 parts by mass or more, further preferably 0.5 parts by mass or more, from the viewpoint of securing a sufficient vulcanization reaction. Moreover, it is preferably 5.0 parts by mass or less, more preferably 4.0 parts by mass or less, further preferably 3.0 parts by mass or less, particularly preferably 2.5 parts by mass or less, from the viewpoint of preventing deterioration. Besides, a content of the vulcanizing agent when an oil-containing sulfur is used as the cross-linking agent shall be a total content of pure sulfur comprised in the oil-containing sulfur.

As cross-linking agents other than sulfur, known organic cross-linking agents can also be used. When an organic cross-linking agent is compounded, a distance between cross-linking points becomes longer than that of cross-linking with sulfur, allowing for a large amount of energy loss to be generated, and therefore a good peak grip performance can be obtained.

The organic cross-linking agent is not particularly limited as long as it can form cross-linked chains other than a polysulfide bond, examples of which, include, for example, an alkylphenol-sulfur chloride condensate, sodium hexamethylene-1,6-bisthiosulfate dihydrate, 1,6-bis(N,N'-dibenzylthiocarbamoyldithio)hexane, dicumylperoxide, and the like. Among them, 1,6-bis(N,N'-dibenzylthiocarbamoyldithio)hexane is preferable. As these organic cross-linking agents, those commercially available from Taoka Chemical Co., Ltd., LANXESS, Flexsys, etc. can be used.

A content of the organic cross-linking agent when compounded based on 100 parts by mass of the rubber component is preferably 1 part by mass or more, more preferably 2 parts by mass or more, further preferably 3 parts by mass or more. Moreover, the content is preferably 10 parts by mass or less, more preferably 8 parts by mass or less, further preferably 6 parts by mass or less.

Examples of the vulcanization accelerator include, for example, a sulfenamide-based vulcanization accelerator, a thiazole-based vulcanization accelerator, a thiuram-based vulcanization accelerator, a guanidine-based vulcanization accelerator, a dithiocarbamate-based vulcanization accelerator, a caprolactam disulfide, and the like. These vulcanization accelerators may be used alone, or two or more thereof may be used in combination. Among them, one or more vulcanization accelerators selected from a group consisting of a sulfenamide-based vulcanization accelerator, a dithiocarbamate-based vulcanization accelerator, a thiuram-based vulcanization accelerator, and a caprolactam disulfide are preferable, and one or more vulcanization accelerators selected from a group consisting of a dithiocarbamate-based vulcanization accelerator and a thiuram-based vulcanization accelerator are more preferable, from the viewpoint that a desired effect can be obtained more appropriately.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like. Among them, TBBS and CBS are preferable.

Examples of the thiazole-based vulcanization accelerator include, for example, 2-mercaptobenzothiazole (MBT) or a salt thereof, di-2-benzothiazolyl disulfide (MBTS), 2-(2,4-dinitrophenyl)mercaptobenzothiazole, 2-(2,6-diethyl-4-morpholinothio)benzothiazole, and the like. Among them, MBTS and MBT are preferable, and MBTS is more preferable.

Examples of the thiuram-based vulcanization accelerator include, for example, tetrakis(2-ethylhexyl)thiuram disulfide (TOT-N), tetramethylthiuram disulfide (TMTD), tetraethylthiuram disulfide, tetramethylthium monosulfide (TMTM), dipentamethylene thiuram disulfide, dipentamethylene thiuram tetrasulfide, and the like. Among them, TOT-N and TMTD are preferable, and TOT-N is more preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like. Among them, DPG is preferable.

Examples of the dithiocarbamate-based vulcanization accelerator include, for example, piperidinium pentamethylene dithiocarbamate (PPDC), zinc dimethyldithiocarbamate (ZnMDC), zinc diethyldithiocarbamate (ZnEDC), zinc dibutyldithiocarbamate (ZnBDC), zinc dibenzyldithiocarbamate (ZDBzC), zinc N-ethyl-N-phenyldithiocarbamate (ZnEPDC), zinc N-pentamethylene dithiocarbamate (ZnPDC), sodium dibutyldithiocarbamate (NaBDC), copper dimethyldithiocarbamate (CuMDC), iron dimethyldithiocarbamate (FeMDC), tellurium diethyldithiocarbamate (TeEDC), and the like. Among them, ZnBDC and ZDBzC are preferable.

Examples of the caprolactam disulfide include, for example, N,N'-di($\delta$-caprolactam)disulfide, N,N'-di($\epsilon$-caprolactam)disulfide, N,N'-di(3-methyl-5-caprolactam)disulfide, N,N'-di(3-ethyl-$\epsilon$-caprolactam)disulfide, N,N'-di($\delta$-methoxy-$\epsilon$-caprolactam)disulfide, N,N'-di(3-chloro-$\epsilon$-caprolactam)disulfide N,N'-di($\delta$-nitro-$\epsilon$-caprolactam)disulfide, N,N'-di(3-amino-$\epsilon$-caprolactam)disulfide, and the like. Among them, N,N'-di($\epsilon$-caprolactam)disulfide is preferable.

A content of the vulcanization accelerator when compounded based on 100 parts by mass of the rubber component is preferably 1.0 part by mass or more, more preferably 1.5 parts by mass or more, further preferably 2.0 parts by mass or more. Moreover, the content of the vulcanization accelerator based on 100 parts by mass of the rubber component is preferably 8.0 parts by mass or less, more preferably 7.0 parts by mass or less, further preferably 6.0 parts by mass or less, particularly preferably 5.0 parts by mass or less. When the content of the vulcanization accelerator is within the above-described ranges, breaking strength and elongation tend to be secured.

The rubber composition according to the present invention can be produced by a known method. For example, it can be produced by kneading each of the above-described components using a rubber kneading apparatus such as an open roll and a closed type kneader (Bunbury mixer, kneader, etc.).

The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them. Furthermore, the base kneading step can be divided into a plurality of steps, if desired.

A kneading condition is not particularly limited. Examples of kneading include, for example, in the base kneading step, a method of kneading at a discharge temperature at 150 to 170°C for 3 to 10 minutes, and in the final kneading step, a method of kneading at 70 to 110°C for 1 to 5 minutes. The vulcanization condition is not particularly limited. Examples of vulcanization include, for example, a method of vulcanizing at 150 to 200°C for 10 to 30 minutes.

The tire of the present invention comprising the tread formed of the above-described rubber composition can be produced by a usual method. That is, the tire can be produced by extruding an unvulcanized rubber composition compounded from the rubber component and other components as necessary into a shape of at least one rubber layer of a tread, attaching it together with other tire members on a tire forming machine, and molding them by a usual method to form an unvulcanized tire, followed by heating and pressurizing this unvulcanized tire in a vulcanizing machine. The vulcanization condition is not particularly limited. Examples of vulcanization include, for example, a method of vulcanizing at 150 to 200°C for 10 to 30 minutes.

<Application>

The tire of the present invention can be a general-purpose tire such as a tire for a passenger car, a tire for ruck/bus, and a tire for a two-wheeled vehicle, or can be a racing tire. Besides, the tire for a passenger car is a tire on the premise that it is mounted on a car running on four wheels and refers to one having the maximum load capacity of 1000 kg or less. Moreover, the tire of the present invention can be used as an all-season tire, a summer tire, or a winter tire such as a studless tire.

EXAMPLE

Hereinafter, the present invention will be described based on Examples, though the present invention is not limited to these Examples.

Various chemicals used in Examples and Comparative examples are collectively shown below.

NR: TSR20

SBR: HP755B manufactured by JSR Corporation (S-SBR, styrene content: 37% by mass, vinyl content: 37 mol%, comprising 37.5 parts by mass of oil content based on 100 parts by mass of rubber component)

BR: Ubepol BR (Registered Trademark) 150B manufactured by Ube Industries, Ltd. (cis content: 97 mol%, Mw: 440,000)

Carbon Black 1: Show Black N330 manufactured by Cabot Japan K.K. ($N_2SA$: 75 $m^2$/g, DBP oil absorption: 102 mL/100g, average primary particle size: 28 nm)

Carbon Black 2: Seast 9 manufactured by Tokai Carbon Co., Ltd. (SAF, $N_2SA$: 142 $m^2$/g, DBP oil absorption: 115 mL/100g, average primary particle size: 19 nm)

Silica: ZEOSIL 1165MP manufactured by Rhodia ($N_2SA$: 160 $m^2$/g) Silane coupling agent: Si69 manufactured by Evonik Degussa GmbH (bis(3-triethoxysilylpropyl)tetrasulfide)

Resin component 1: Petrotack 100V manufactured by Tosoh Corporation (C5-C9-based petroleum resin, softening point: 96°C)

Resin component 2: YS resin TO125 manufactured by Yasuhara Chemical Co., Ltd. (terpene styrene resin, softening point: 125°C)

Ester-based plasticizer: DOS manufactured by DAIHACHI CHEMICAL INDUSTRY CO., LTD. (bis (2-ethylhexyl)sebacate)

Liquid rubber: L-SBR-820 manufactured by Kuraray Co., Ltd. (liquid SBR)

Oil: VivaTec 500 manufactured by H&R Group (TDAE oil)

Zinc oxide: Zinc oxide No. 2 manufactured by Mitsui Mining & Smelting Co., Ltd.

Stearic acid: Bead stearic acid "CAMELLIA" manufactured by NOF CORPORATION

Antioxidant: Antigen 6C manufactured by Sumitomo Chemical Co., Ltd. (N-(1,3-dimethylbutyl)-N'-phenyl-p-phenylenediamine)

Wax: SUNNOC N manufactured by Ouchi Shinko Chemical Industry Co., Ltd.

Sulfur: Powdered sulfur manufactured by Karuizawa Sulfur Co, Ltd.

Organic cross-linking agent: VP KA9188 manufactured by LANXESS (1,6-bis(N,N'-dibenzylthiocarbamoyldithio)hexane)

Vulcanization accelerator 1: Sanceler CM-G manufactured by Sanshin Chemical Industry Co., Ltd. (N-cyclohexyl-2-benzothiazolylsulfeneamide (CBS))

Vulcanization accelerator 2: Nocceler ZTC manufactured by Ouchi Shinko Chemical Industry Co., Ltd. (zinc dibenzyldithiocarbamate (ZDBzC))

Vulcanization accelerator 3: Nocceler TOT-N manufactured by Ouchi Shinko Chemical Industry Co., Ltd. (tetrakis(2-ethylhexyl)thiuram disulfide)

Vulcanization accelerator 4: Rhenogran CLD-80 manufactured by Rhein Chemie (N,N'-di(ε-caprolactam)disulfide).

(Examples and Comparative examples)

According to the compounding formulations shown in Tables 1 and 2, using a 1.7 L closed Banbury mixer, all chemicals other than sulfur and vulcanization accelerators were kneaded until a discharge temperature at 150°C to 160°C for 1 to 10 minutes to obtain a kneaded product. Next, using a twinscrew open roll, sulfur and vulcanization accelerators were added to the obtained kneaded product, and the mixture was kneaded for 4 minutes until the temperature reached 105°C to obtain an unvulcanized rubber composition. The obtained unvulcanized rubber composition was extruded into a shape of a cap rubber layer of a tread (thickness: 5.5 mm) with an extruder equipped with a mouthpiece having a predetermined shape and attached together with an intermediate rubber layer (thickness: 1.5 mm) interposed between the cap rubber layer and a belt layer and other tire members to prepare an unvulcanized tire, and the unvulcanized tire was press-vulcanized under a condition at 170°C for 12 minutes to obtain each test tire (size: 205/55R15, rim: 16 × 6.5J, internal pressure: 230 kPa) shown in Tables 3 and 4. Besides, a groove depth (deepest part) of a circumferential groove was set to 5.0 mm. Table 3 shows a tire for a passenger car, and Table 4 shows a racing tire.

<Measurement of tan δA and Tg of rubber composition>

Each rubber specimen after vulcanization was cut out with length 20 mm × width 4 mm × thickness 1 mm from each rubber layer of a tread part of each test tire so that a tire circumferential direction becomes on a long side and a tire radial direction becomes a thickness direction. For each rubber specimen, using EPLEXOR series manufactured by gabo Systemtechnik GmbH, a loss tangent tan δ was measured at each temperature in 5°C increments from -15°C to 20°C, under a condition of a frequency of 10 Hz, an initial strain of 0.1%, and a dynamic strain amplitude of ± 0.25%. Then, an average value of the obtained eight numerical values was defined as a tan δA. Moreover, a temperature distribution curve of the tan δ was measured under a condition of a frequency of 10 Hz, an initial strain of 0.1%, a dynamic strain amplitude of ± 0.25%, and a temperature rising rate of 3°C/min, and a temperature corresponding to the largest tan δ value in the obtained temperature distribution curve (tan δ peak temperature) was defined as a glass transition temperature (Tg). The results are shown in Tables 1 and 2.

<Measurement of 30°C tan δ and 30°C E*>

Each rubber specimen after vulcanization was cut out with length 20 mm × width 4 mm × thickness 1 mm from each rubber layer of a tread part of each test tire so that a tire circumferential direction becomes on a long side and a tire radial direction becomes a thickness direction. For each rubber specimen, using EPLEXOR series manufactured by gabo Systemtechnik GmbH, a tan δ and a complex elastic modulus (E*) were measured under a condition of a temperature at 30°C, a frequency of 10 Hz, an initial strain of 5%, a dynamic strain of 1%. The results are shown in Tables 1 and 2.

<Initial grip performance>

The test tire was mounted on all wheels of a domestic FR car (2000 cc), and actual vehicle running with 10 laps was performed on a test course with a dry asphalt road surface. Then, test drivers sensory-evaluated stability of control during steering on the second lap. The evaluations were performed using an integer value of 1 to 10 points, and based on evaluation criteria that the higher the score is, the better the stability of control during steering is, a total score by 10 test drivers was calculated. A total score of reference Comparative examples (Comparative example 1 in Table 3 and Comparative example 12 in Table 4) was converted into a reference value (100), and the evaluation result for each test tire was indicated as an index in proportion to the total score. The results show that the larger the numerical value is, the higher the initial grip performance is.

<Peak grip performance>

The test tire was mounted on all wheels of a domestic FR car (2000 cc), and actual vehicle running with 10 laps was performed on the test course with the dry asphalt road surface. Then, the test drivers sensory-evaluated stability of control during steering on the best lap and the final lap. The evaluations were performed using an integer value of 1 to 10 points, and based on evaluation criteria that the higher the score is, the better the stability of control during steering is, a total score by 10 test drivers was calculated. A total score of reference Comparative examples (Comparative example 1 in Table 3 and Comparative example 12 in Table 4) was converted into a reference value (100), and the evaluation result for each test tire was indicated as an index in proportion to the total score. The results show that the larger the numerical value is, the smaller the decrease in grip performance during running on the dry road surface is, thereby satisfactorily obtaining a stable grip performance during running.

Besides, a performance target value shall be more than 200 for an overall performance of initial grip performance and peak grip performance (a sum of an initial grip performance index and a peak grip performance index).

Table 1

| | Cap rubber layer | | | | | | | | |
|---|---|---|---|---|---|---|---|---|---|
| | A1 | A2 | A3 | A4 | A5 | A6 | A7 | A8 | A9 |
| Compounding amount (part by mass) | | | | | | | | | |
| NR | - | - | - | - | - | - | - | - | 20 |
| SBR | 80 | 137.5 | 137.5 | 137.5 | 80 | 137.5 | 137.5 | 137.5 | 110 |
| (Rubber solid content) | (50) | (100) | (100) | (100) | (50) | (100) | (100) | (100) | (80) |
| BR | 50 | - | - | - | 50 | - | - | - | - |
| Carbon black 1 | 5.0 | 5.0 | 5.0 | 5.0 | 5.0 | 5.0 | 5.0 | 5.0 | 5.0 |
| Silica | 80 | 80 | 80 | 80 | 100 | 100 | 100 | 100 | 100 |
| Silane coupling agent | 8.0 | 8.0 | 8.0 | 8.0 | 8.0 | 8.0 | 8.0 | 8.0 | 8.0 |
| Resin component 1 | 10 | 10 | 10 | 10 | - | - | - | - | - |
| Resin component 2 | - | - | - | - | 30 | 30 | 30 | 30 | 40 |

(continued)

| | Cap rubber layer | | | | | | | | |
|---|---|---|---|---|---|---|---|---|---|
| | A1 | A2 | A3 | A4 | A5 | A6 | A7 | A8 | A9 |
| **Compounding amount (part by mass)** | | | | | | | | | |
| Ester-based plasticizer | - | - | 15 | 15 | - | - | 15 | 15 | 15 |
| Liquid rubber | - | - | - | - | - | - | 15 | 15 | 20 |
| Oil | - | - | - | - | - | 30 | 15 | 15 | 27.5 |
| Zinc oxide | 3.0 | 3.0 | 3.0 | 3.0 | 3.0 | 3.0 | 3.0 | 3.0 | 3.0 |
| Stearic acid | 3.0 | 3.0 | 3.0 | 3.0 | 3.0 | 3.0 | 3.0 | 3.0 | 3.0 |
| Antioxidant | 2.0 | 2.0 | 2.0 | 2.0 | 2.0 | 2.0 | 2.0 | 2.0 | 2.0 |
| Wax | 2.0 | 2.0 | 2.0 | 2.0 | 2.0 | 2.0 | 2.0 | 2.0 | 2.0 |
| Sulfur | 2.0 | 2.0 | 2.0 | 0.8 | 2.0 | 2.0 | 2.0 | 0.8 | 0.8 |
| Organic crosslinking agent | - | - | - | 5.0 | - | - | - | 5.0 | 5.0 |
| Vulcanization accelerator 1 | 2.0 | 2.0 | 2.0 | - | 2.0 | 2.0 | 2.0 | - | - |
| Vulcanization accelerator 2 | 1.0 | 1.0 | 1.0 | - | 1.0 | 1.0 | 1.0 | - | - |
| Vulcanization accelerator 3 | - | - | - | 3.0 | - | - | - | 3.0 | 3.0 |
| Vulcanization accelerator 4 | - | - | - | 1.5 | - | - | - | 1.5 | 1.5 |
| tan δA | 0.18 | 0.29 | 0.25 | 0.26 | 0.41 | 0.48 | 0.46 | 0.48 | 0.46 |
| 30°C tan δ | 0.16 | 0.24 | 0.20 | 0.22 | 0.33 | 0.42 | 0.40 | 0.41 | 0.38 |
| 30°C E* (MPa) | 54 | 68 | 52 | 51 | 51 | 21 | 12 | 10 | 10 |
| Tq (°C) | -26 | -16 | -23 | -22 | -19 | -8 | -14 | -12 | -13 |

-continued-

Table 2

| | Cap rubber layer | | | | | | | | |
|---|---|---|---|---|---|---|---|---|---|
| | B1 | B2 | B3 | B4 | B5 | B6 | B7 | B8 | B9 |
| **Compounding amount (part by mass)** | | | | | | | | | |
| SBR (Rubber solid content) | 137.5 (100) | 137.5 (100) | 137.5 (100) | 137.5 (100) | 137.5 (100) | 137.5 (100) | 137.5 (100) | 137.5 (100) | 137.5 (100) |
| Carbon black 1 | 60 | 60 | 60 | 120 | 120 | 120 | 120 | - | 120 |
| Carbon black 2 | - | - | - | - | - | - | - | 120 | - |
| Resin component 1 | 10 | 10 | 10 | 30 | 30 | 30 | - | 20 | 20 |
| Resin component 2 | - | - | - | - | - | - | 10 | - | - |
| Ester-based plasticizer | - | 15 | 15 | - | 15 | 15 | 10 | - | - |
| Oil | 30 | 15 | 15 | 30 | 15 | 15 | 10 | 10 | 10 |
| Zinc oxide | 2.0 | 2.0 | 2.0 | 2.0 | 2.0 | 2.0 | 3.0 | 3.0 | 3.0 |
| Stearic acid | 2.0 | 2.0 | 2.0 | 2.0 | 2.0 | 2.0 | 3.0 | 3.0 | 3.0 |
| Antioxidant | 2.0 | 2.0 | 2.0 | 2.0 | 2.0 | 2.0 | 2.0 | 2.0 | 2.0 |
| Wax | 2.0 | 2.0 | 2.0 | 2.0 | 2.0 | 2.0 | 2.0 | 2.0 | 2.0 |
| Sulfur | 1.5 | 1.5 | 1.5 | 1.5 | 1.5 | 1.5 | 1.5 | 1.5 | 1.5 |
| Organic crosslinking agent | - | - | 5.0 | - | - | 5.0 | - | - | 3.0 |
| Vulcanization accelerator 1 | 2.0 | 2.0 | - | 2.0 | 2.0 | - | 2.0 | 2.0 | - |
| Vulcanization accelerator 2 | 1.0 | 1.0 | - | 1.0 | 1.0 | - | 1.0 | 1.0 | - |
| Vulcanization accelerator 3 | - | - | 3.0 | - | - | 3.0 | - | - | 3.0 |
| Vulcanization accelerator 4 | - | - | 1.5 | - | - | 1.5 | - | - | 1.5 |
| tan δA | 0.19 | 0.16 | 0.18 | 0.47 | 0.45 | 0.48 | 0.48 | 0.54 | 0.50 |

(continued)

| | Cap rubber layer | | | | | | | | |
|---|---|---|---|---|---|---|---|---|---|
| | B1 | B2 | B3 | B4 | B5 | B6 | B7 | B8 | B9 |
| Compounding amount (part by mass) | | | | | | | | | |
| 30°C tan δ | 0.15 | 0.13 | 0.14 | 0.44 | 0.43 | 0.44 | 0.45 | 0.46 | 0.40 |
| 30°C E* (MPa) | 12 | 9 | 9 | 56 | 41 | 39 | 33 | 44 | 42 |
| Tq (°C) | -20 | -26 | -23 | -7 | -12 | -11 | -9 | -5 | -3 |

Table 3 (Tire for passenger car)

| | Comparative example | | | | | | | | | | |
|---|---|---|---|---|---|---|---|---|---|---|---|
| | 1 | 2 | 3 | 4 | 5 | 6 | 7 | 8 | 9 | 10 | 11 |
| Cap rubber layer | A1 | A1 | A2 | A2 | A2 | A3 | A4 | A4 | A4 | A4 | A5 |
| Land ratio R | 0.83 | 0.64 | 0.64 | 0.64 | 0.64 | 0.64 | 0.64 | 0.64 | 0.64 | 0.64 | 0.83 |
| tan δA | 0.18 | 0.18 | 0.29 | 0.29 | 0.29 | 0.25 | 0.26 | 0.26 | 0.26 | 0.26 | 0.41 |
| 30°C tan δ | 0.16 | 0.16 | 0.24 | 0.24 | 0.24 | 0.20 | 0.22 | 0.22 | 0.22 | 0.22 | 0.33 |
| 30°C E* (MPa) | 54 | 54 | 68 | 68 | 68 | 52 | 51 | 51 | 51 | 51 | 51 |
| Tq (°C) | -26 | -26 | -16 | -16 | -16 | -23 | -22 | -22 | -22 | -22 | -19 |
| $L_{95}/L_0$ | 0.60 | 0.60 | 0.60 | 0.34 | 0.21 | 0.21 | 0.21 | 0.21 | 0.21 | 0.21 | 0.60 |
| tan δA × R | 0.15 | 0.12 | 0.19 | 0.19 | 0.19 | 0.16 | 0.17 | 0.17 | 0.17 | 0.17 | 0.34 |
| tan δA / ($L_{95}/L_0$) | 0.30 | 0.30 | 0.48 | 0.85 | 1.38 | 1.19 | 1.24 | 1.24 | 1.24 | 1.24 | 0.68 |
| Groove area in circumferential direction/ qroundinq area | 0.33 | 0.33 | 0.33 | 0.33 | 0.33 | 0.33 | 0.33 | 0.24 | 0.24 | 0.24 | 0.30 |
| Groove area in width direction/grounding area | 0.25 | 0.25 | 0.25 | 0.25 | 0.25 | 0.25 | 0.25 | 0.15 | 0.15 | 0.15 | 0.23 |
| Center part area/ qroundinq area | 0.28 | 0.28 | 0.28 | 0.28 | 0.28 | 0.28 | 0.28 | 0.28 | 0.48 | 0.48 | 0.27 |
| Groove area ratio in shoulder land part | 0.10 | 0.10 | 0.10 | 0.10 | 0.10 | 0.10 | 0.10 | 0.06 | 0.06 | 0.10 | 0.10 |
| Groove area ratio in shoulder land part | 0.15 | 0.15 | 0.15 | 0.15 | 0.15 | 0.15 | 0.15 | 0.09 | 0.09 | 0.05 | 0.13 |
| Index | | | | | | | | | | | |
| Initial grip performance | 100 | 80 | 84 | 86 | 88 | 86 | 84 | 88 | 88 | 89 | 105 |
| Peak grip performance | 100 | 100 | 96 | 98 | 98 | 100 | 102 | 106 | 108 | 108 | 90 |

| | Example | | | | | | | | | | |
|---|---|---|---|---|---|---|---|---|---|---|---|
| | 1 | 2 | 3 | 4 | 5 | 6 | 7 | 8 | 9 | 10 | 11 |
| Cap rubber layer | A5 | A6 | A6 | A7 | A8 | A8 | A8 | A8 | A8 | A8 | A9 |
| Land ratio R | 0.64 | 0.64 | 0.64 | 0.64 | 0.64 | 0.64 | 0.64 | 0.64 | 0.50 | 0.75 | 0.64 |
| tan δA | 0.41 | 0.48 | 0.48 | 0.46 | 0.48 | 0.48 | 0.48 | 0.48 | 0.48 | 0.48 | 0.46 |

(continued)

| | Example | | | | | | | | | | |
|---|---|---|---|---|---|---|---|---|---|---|---|
| | 1 | 2 | 3 | 4 | 5 | 6 | 7 | 8 | 9 | 10 | 11 |
| 30°C tan $\delta$ | 0.33 | 0.42 | 0.42 | 0.40 | 0.41 | 0.41 | 0.41 | 0.41 | 0.41 | 0.41 | 0.38 |
| 30°C E* (MPa) | 51 | 21 | 21 | 12 | 10 | 10 | 10 | 10 | 10 | 10 | 10 |
| Tq (°C) | -19 | -8 | -8 | -14 | -12 | -12 | -12 | -12 | -12 | -12 | -13 |
| $L_{95}/L_0$ | 0.60 | 0.60 | 0.34 | 0.34 | 0.34 | 0.34 | 0.34 | 0.34 | 0.34 | 0.34 | 0.34 |
| tan $\delta$A $\times$ R | 0.26 | 0.31 | 0.31 | 0.29 | 0.31 | 0.31 | 0.31 | 0.31 | 0.24 | 0.36 | 0.29 |
| tan $\delta$A / $(L_{95}/L_0)$ | 0.68 | 0.80 | 1.41 | 1.41 | 1.41 | 1.41 | 1.41 | 1.41 | 1.41 | 1.41 | 1.35 |
| Groove area in circumferential direction/ qroundinq area | 0.30 | 0.30 | 0.30 | 0.30 | 0.30 | 0.21 | 0.21 | 0.21 | 0.28 | 0.15 | 0.21 |
| Groove area in width direction/grounding area | 0.23 | 0.23 | 0.23 | 0.23 | 0.23 | 0.13 | 0.13 | 0.13 | 0.18 | 0.10 | 0.13 |
| Center part area/ qroundinq area | 0.27 | 0.27 | 0.27 | 0.27 | 0.27 | 0.27 | 0.51 | 0.51 | 0.27 | 0.51 | 0.51 |
| Groove area ratio in shoulder land part | 0.10 | 0.10 | 0.10 | 0.10 | 0.10 | 0.06 | 0.06 | 0.08 | 0.10 | 0.05 | 0.08 |
| Groove area ratio in shoulder land part | 0.13 | 0.13 | 0.13 | 0.13 | 0.13 | 0.07 | 0.07 | 0.05 | 0.13 | 0.05 | 0.05 |
| Index | | | | | | | | | | | |
| Initial grip performance | 122 | 138 | 142 | 140 | 138 | 136 | 142 | 142 | 134 | 144 | 140 |
| Peak grip performance | 118 | 122 | 128 | 128 | 134 | 146 | 144 | 148 | 120 | 156 | 142 |

Table 4 (Racing tire)

| | Comparative example | | | | | | | | |
|---|---|---|---|---|---|---|---|---|---|
| | 12 | 13 | 14 | 15 | 16 | 17 | 18 | 19 | 20 |
| Cap rubber layer | B1 | B1 | B1 | B2 | B3 | B3 | B3 | B3 | B4 |
| Land ratio R | 0.86 | 0.71 | 0.86 | 0.86 | 0.86 | 0.86 | 0.86 | 0.86 | 0.86 |
| tan $\delta$A | 0.19 | 0.19 | 0.19 | 0.16 | 0.18 | 0.18 | 0.18 | 0.18 | 0.47 |
| 30°C tan $\delta$ | 0.15 | 0.15 | 0.15 | 0.13 | 0.14 | 0.14 | 0.14 | 0.14 | 0.44 |
| 30°C E* (MPa) | 12 | 12 | 12 | 9 | 9 | 9 | 9 | 9 | 56 |
| Tg (°C) | -20 | -20 | -20 | -26 | -23 | -23 | -23 | -23 | -7 |
| $L_{95}/L_0$ | 0.60 | 0.60 | 0.42 | 0.42 | 0.42 | 0.42 | 0.42 | 0.42 | 0.60 |
| tan $\delta$A $\times$ R | 0.16 | 0.13 | 0.16 | 0.14 | 0.15 | 0.15 | 0.15 | 0.15 | 0.40 |
| tan $\delta$A / $(L_{95}/L_0)$ | 0.32 | 0.32 | 0.45 | 0.38 | 0.43 | 0.43 | 0.43 | 0.43 | 0.78 |
| Groove area in circumferential direction/grounding area | 0.31 | 0.31 | 0.31 | 0.31 | 0.31 | 0.19 | 0.19 | 0.19 | 0.31 |
| Groove area in width direction/grounding area | 0.26 | 0.26 | 0.26 | 0.26 | 0.26 | 0.13 | 0.13 | 0.13 | 0.26 |
| Center part area/grounding area | 0.25 | 0.25 | 0.25 | 0.25 | 0.25 | 0.25 | 0.44 | 0.44 | 0.25 |
| Groove area ratio in shoulder land part | 0.12 | 0.12 | 0.12 | 0.12 | 0.12 | 0.05 | 0.05 | 0.07 | 0.12 |
| Groove area ratio in shoulder land part | 0.14 | 0.14 | 0.14 | 0.14 | 0.14 | 0.08 | 0.08 | 0.06 | 0.14 |

(continued)

| Index | | | | | | | | | |
|---|---|---|---|---|---|---|---|---|---|
| Initial grip performance | 100 | 88 | 88 | 84 | 80 | 84 | 84 | 86 | 108 |
| Peak grip performance | 100 | 104 | 108 | 104 | 104 | 108 | 112 | 110 | 84 |

- continued - - continued -

| | Example | | | | | | | | | | |
|---|---|---|---|---|---|---|---|---|---|---|---|
| | 12 | 13 | 14 | 15 | 16 | 17 | 18 | 19 | 20 | 21 | 22 |
| Cap rubber layer | B4 | B4 | B5 | B6 | B6 | B6 | B6 | B7 | B8 | B9 | B6 |
| Land ratio R | 0.70 | 0.70 | 0.70 | 0.70 | 0.70 | 0.70 | 0.70 | 0.70 | 0.70 | 0.70 | 0.60 |
| $\tan \delta A$ | 0.47 | 0.47 | 0.45 | 0.48 | 0.48 | 0.48 | 0.48 | 0.48 | 0.54 | 0.50 | 0.48 |
| 30°C $\tan \delta$ | 0.44 | 0.44 | 0.43 | 0.44 | 0.44 | 0.44 | 0.44 | 0.45 | 0.46 | 0.40 | 0.44 |
| 30°C E* (MPa) | 56 | 56 | 41 | 39 | 39 | 39 | 39 | 33 | 44 | 42 | 39 |
| Tg (°C) | -7 | -7 | -12 | -11 | -11 | -11 | -11 | -9 | -5 | -3 | -11 |
| $L_{95}/L_0$ | 0.60 | 0.35 | 0.35 | 0.30 | 0.30 | 0.30 | 0.30 | 0.30 | 0.30 | 0.30 | 0.30 |
| $\tan \delta A \times R$ | 0.33 | 0.33 | 0.32 | 0.34 | 0.34 | 0.34 | 0.34 | 0.34 | 0.37 | 0.35 | 0.29 |
| $\tan \delta A / (L_{95}/L_0)$ | 0.78 | 1.34 | 1.29 | 1.60 | 1.60 | 1.60 | 1.60 | 1.60 | 1.80 | 1.67 | 1.41 |
| Groove area in circumferential direction/ grounding area | 0.31 | 0.31 | 0.31 | 0.31 | 0.16 | 0.16 | 0.16 | 0.16 | 0.16 | 0.16 | 0.19 |
| Groove area in width direction/grounding area | 0.25 | 0.25 | 0.25 | 0.25 | 0.11 | 0.11 | 0.11 | 0.11 | 0.11 | 0.11 | 0.13 |
| Center part area/ grounding area | 0.22 | 0.22 | 0.22 | 0.22 | 0.22 | 0.39 | 0.39 | 0.39 | 0.39 | 0.39 | 0.35 |
| Groove area ratio in shoulder land part | 0.11 | 0.11 | 0.11 | 0.11 | 0.04 | 0.04 | 0.08 | 0.08 | 0.08 | 0.08 | 0.10 |
| Groove area ratio in shoulder land part | 0.14 | 0.14 | 0.14 | 0.14 | 0.07 | 0.07 | 0.03 | 0.03 | 0.03 | 0.03 | 0.05 |
| Index | | | | | | | | | | | |
| Initial grip performance | 124 | 128 | 134 | 134 | 140 | 146 | 148 | 148 | 154 | 150 | 136 |
| Peak grip performance | 120 | 126 | 130 | 134 | 136 | 140 | 144 | 146 | 148 | 144 | 138 |

From the results in Tables 3 and 4, it can be found that the tire of the present invention, in which the land ratio on the grounding surface of the tread part and the average value of the loss tangent tan δ of the tread rubber in a specific temperature region are set within predetermined ranges, has improved overall performance of the initial grip performance and the peak grip performance on the dry road surface.

REFERENCE SIGNS LIST

1. Tread surface
2. Center land part
3. Shoulder land part
4. Circumferential groove
5, 6, 7, 8. Width direction groove

9. Groove whose both ends communicate with circumferential groove

15. Groove wall

C. Tire circumferential direction

W. Tire width direction

CL. Tire equator

Te. Tread end

$L_0$. Groove width on tread surface of circumferential groove

$L_{95}$. Groove width at 95% position of deepest part of groove bottom of circumferential groove

**Claims**

1. A tire comprising a tread part,

    the tread part having two or more circumferential grooves (4) extending continuously in a tire circumferential direction (C), a pair of shoulder land parts (3) partitioned by the circumferential grooves (4) and grounding ends, a center land part (2) located between the pair of shoulder land parts (3), and a width direction groove (5, 6, 7, 8), wherein a land ratio R on a grounding surface of the tread part is 0.50 to 0.80, the land ratio R being a ratio of a total area of a grounding surface to a total surface area of a tread surface under the assumption that all the grooves are filled when a standardized load is applied to a tire in a standardized state and the tire is grounded on a flat surface at a camber angle of 0 degree,
    wherein the tread part has at least one rubber layer consisting of a rubber composition comprising a rubber component, **characterized in that**
    an average value tan $\delta$A of a loss tangent tan $\delta$ of the rubber composition at -15°C to 20°C, obtained by measuring a tan $\delta$ at each temperature from -15°C to 20°C in 5°C increments under a condition of a frequency of 10 Hz, an initial strain of 0.1%, and a dynamic strain amplitude of $\pm$ 0.25%, and calculating an average value of eight numerical values obtained, is 0.40 to 0.60.

2. The tire of claim 1, wherein tan $\delta$A and land ratio R satisfy the following inequality (1):

$$\text{Inequality (1): } 0.21 \leqq \tan \delta A \times R \leqq 0.45$$

3. The tire of claim 1 or 2, wherein the rubber component comprises at least one of an isoprene-based rubber and a butadiene rubber.

4. The tire of any one of claims 1 to 3, wherein a length of at least one land part in a tire width direction (W) increases gradually from an outside toward an inside in a tire radial direction.

5. The tire of any one of claims 1 to 4, wherein, when a groove width on a tread surface of the circumferential groove placed outermost when mounted on a vehicle is defined as $L_0$, and a groove width at 95% position of a deepest part of a groove bottom of the circumferential groove placed outermost when mounted on the vehicle is defined as $L_{95}$, $L_{95}/L_0$ is 0.10 to 0.50.

6. The tire of claim 5, wherein tan $\delta$A and $L_{95}/L_0$ satisfy the following inequality (2):

$$\text{Inequality (2): } \tan \delta A/(L_{95}/L_0) \geqq 1.20$$

7. The tire of any one of claims 1 to 6, wherein the rubber composition comprises 5 to 50 parts by mass of a resin component and/or an ester-based plasticizer based on 100 parts by mass of the rubber component.

8. The tire of any one of claims 1 to 7, wherein the rubber composition comprises 5 to 150 parts by mass of carbon black having an average primary particle size of 25 nm or less based on 100 parts by mass of the rubber component.

9. The tire of any one of claims 1 to 8, wherein the rubber composition comprises 1 to 10 parts by mass of an organic cross-linking agent based on 100 parts by mass of the rubber component.

**10.** The tire of any one of claims 1 to 9, wherein a tan $\delta$ at 30°C (30°C tan $\delta$) of the rubber composition is 0.35 or more.

**11.** The tire of any one of claims 1 to 10, wherein a complex elastic modulus at 30°C (30°C E*) of the rubber composition is 50 MPa or less.

**12.** The tire of any one of claims 1 to 11, wherein a glass transition temperature of the rubber composition is -25°C or higher.

**13.** The tire of any one of claims 1 to 12, wherein a ratio of a total area of the circumferential grooves (4) to a grounding area of the tread part is 0.12 to 0.28 and a ratio of a total area of the width direction grooves (5, 6, 7, 8) to the grounding area of the tread part is 0.08 to 0.20.

**14.** The tire of any one of claims 1 to 13, wherein a ratio of a total area of the center land part (2) to the grounding area of the tread part is 0.30 to 0.65.

**15.** The tire of any one of claims 1 to 14, wherein an area ratio of the width direction grooves (5, 6, 7, 8) in the shoulder land part (3) is larger than an area ratio of the width direction grooves (5, 6, 7, 8) in the center land part (2), wherein the area ratio of the width direction grooves (5, 6, 7, 8) in the shoulder land part (3) is a total area of all the grooves crossing shoulder land parts (3) with respect to a total area of the shoulder land parts (3), and the area ratio of the width direction grooves (5, 6, 7, 8) in the center land part (2) is a total area of all the grooves crossing center land parts (2) with respect to a total area of the center land parts (2).

**Patentansprüche**

**1.** Reifen, umfassend einen Laufstreifenteil,

wobei der Laufstreifenteil zwei oder mehr Umfangsrillen (4), die sich kontinuierlich in einer Reifenumfangsrichtung (C) erstrecken, ein Paar von Schulterpositivprofilteilen (3), die durch die Umfangsrillen (4) und Bodenkontakt-Enden abgetrennt sind, einen Zentrumspositivprofilteil (2), der sich zwischen dem Paar von Schulterpositivprofilteilen (3) befindet, und eine Querrichtungsrille (5, 6, 7, 8) aufweist,
wobei ein Positivprofilanteil R auf einer Bodenkontaktoberfläche des Laufstreifenteils 0,50 bis 0,80 beträgt,
wobei der Positivprofilanteil R ein Verhältnis einer gesamten Fläche einer Bodenkontaktoberfläche zu einer Gesamtfläche einer Laufstreifenoberfläche ist, unter der Annahme, dass alle Rillen gefüllt sind, wenn eine genormte Last auf einen Reifen in einem genormten Zustand aufgebracht wird, und der Reifen auf einer ebenen Oberfläche bei einem Radsturzwinkel von 0 Grad in Bodenkontakt steht,
wobei der Laufstreifenteil mindestens eine Kautschukschicht aufweist, die aus einer Kautschukzusammensetzung besteht, welche eine Kautschukkomponente umfasst, **dadurch gekennzeichnet, dass**
ein Mittelwert tan $\delta$A eines Verlusttangens tan $\delta$ der Kautschukzusammensetzung bei -15°C bis 20°C, erhalten durch Messen eines tan $\delta$ bei jeder Temperatur von -15°C bis 20°C in 5°C-Schritten unter Bedingungen einer Frequenz von 10 Hz, einer Anfangsdehnung von 0,1 % und einer dynamischen Dehnungsamplitude von $\pm$0,25 %, und Berechnen eines Mittelwertes von acht erhaltenen Zahlenwerten, 0,40 bis 0,60 beträgt.

**2.** Reifen nach Anspruch 1, wobei tan $\delta$A und Positivprofilanteil R der folgenden Ungleichung (1) genügen:

$$\text{Ungleichung (1): } 0,21 \leq \tan \delta A \times R \leq 0,45$$

**3.** Reifen nach Anspruch 1 oder 2, wobei die Kautschukkomponente mindestens einen von einem Isopren-basierten Kautschuk und einem Butadien-Kautschuk umfasst.

**4.** Reifen nach einem der Ansprüche 1 bis 3, wobei eine Länge mindestens eines Positivprofilteils in einer Reifenbreitenrichtung (W) von einer Außenseite zu einer Innenseite in einer Reifenradialrichtung allmählich ansteigt.

**5.** Reifen nach einem der Ansprüche 1 bis 4, wobei, wenn eine Rillenbreite auf einer Laufstreifenoberfläche der Umfangsrille, die, wenn an einem Fahrzeug montiert, zuäußerst platziert ist, als $L_0$ definiert ist, und eine Rillenbreite bei einer 95%-Position eines tiefsten Teils eines Rillenbodens der Umfangsrille, die, wenn am Fahrzeug montiert, zuäußerst platziert ist, als $L_{95}$ definiert ist, $L_{95}/L_0$ 0,10 bis 0,50 beträgt.

6. Reifen nach Anspruch 5, wobei tan $\delta$A und $L_{95}/L_0$ der folgenden Ungleichung (2) genügen:

$$\text{Ungleichung (2): tan } \delta A/(L_{95}/L_0) \geq 1{,}20$$

7. Reifen nach einem der Ansprüche 1 bis 6, wobei die Kautschukzusammensetzung 5 bis 50 Massenteile einer Harzkomponente und/oder eines Ester-basierten Weichmachers bezogen auf 100 Massenteile der Kautschukkomponente umfasst.

8. Reifen nach einem der Ansprüche 1 bis 7, wobei die Kautschukzusammensetzung 5 bis 150 Massenteile Ruß, der eine mittlere Primärpartikelgröße von 25 nm oder weniger aufweist, bezogen auf 100 Massenteile der Kautschukkomponente umfasst.

9. Reifen nach einem der Ansprüche 1 bis 8, wobei die Kautschukzusammensetzung 1 bis 10 Massenteile eines organischen Vernetzungsmittels bezogen auf 100 Massenteile der Kautschukkomponente umfasst.

10. Reifen nach einem der Ansprüche 1 bis 9, wobei ein tan $\delta$ bei 30°C (30°C tan $\delta$) der Kautschukzusammensetzung 0,35 oder mehr beträgt.

11. Reifen nach einem der Ansprüche 1 bis 10, wobei ein komplexer Elastizitätsmodul bei 30°C (30°C E*) der Kautschukzusammensetzung 50 MPa oder weniger beträgt.

12. Reifen nach einem der Ansprüche 1 bis 11, wobei eine Glasübergangstemperatur der Kautschukzusammensetzung -25°C oder höher ist.

13. Reifen nach einem der Ansprüche 1 bis 12, wobei ein Verhältnis einer gesamten Fläche der Umfangsrillen (4) zu einer Bodenkontaktfläche des Laufstreifenteils 0,12 bis 0,28 beträgt, und ein Verhältnis einer gesamten Fläche der Querrichtungsrillen (5, 6, 7, 8) zu der Bodenkontaktfläche des Laufstreifenteils 0,08 bis 0,20 beträgt.

14. Reifen nach einem der Ansprüche 1 bis 13, wobei ein Verhältnis einer gesamten Fläche des Zentrumspositivprofilteils (2) zu der Bodenkontaktfläche des Laufstreifenteils 0,30 bis 0,65 beträgt.

15. Reifen nach einem der Ansprüche 1 bis 14, wobei ein Flächenanteil der Querrichtungsrillen (5, 6, 7, 8) in dem Schulterpositivprofilteil (3) größer ist als ein Flächenanteil der Querrichtungsrillen (5, 6, 7, 8) in dem Zentrumspositivprofilteil (2), wobei der Flächenanteil der Querrichtungsrillen (5, 6, 7, 8) in dem Schulterpositivprofilteil (3) eine gesamte Fläche aller Rillen, welche Schulterpositivprofilteile (3) queren, in Bezug auf eine gesamte Fläche der Schulterpositivprofilteile (3) ist, und der Flächenanteil der Querrichtungsrillen (5, 6, 7, 8) in dem Zentrumspositivprofilteil (2) eine gesamte Fläche aller Rillen, welche Zentrumspositivprofilteile (2) queren, in Bezug auf eine gesamte Fläche der Zentrumspositivprofilteile (2) ist.

**Revendications**

1. Pneumatique comprenant une partie formant bande de roulement,

la partie formant bande de roulement ayant deux ou plusieurs rainures circonférentielles (4) s'étendant en continu dans une direction circonférentielle du pneumatique (C), une paire de parties en relief d'épaulement (3) divisées par les rainures circonférentielles (4) et des extrémités de contact au sol, une partie en relief centrale (2) située entre la paire de parties en relief d'épaulement (3), et une rainure en direction de la largeur (5, 6, 7, 8), dans lequel un rapport de relief R sur une surface de contact au sol de la partie formant bande de roulement est de 0,50 à 0,80, le rapport de relief R étant un rapport d'une aire totale d'une surface de contact au sol sur une aire de surface totale de la surface de bande de roulement, dans l'hypothèse où toutes les rainures sont remplies quand une charge standardisée est appliquée sur un pneumatique dans un état standardisé et où le pneumatique est mis en contact avec le sol sur une surface plate sous un angle de cambrure de 0 degré, dans lequel la partie formant bande de roulement a au moins une couche de caoutchouc constituée d'une composition de caoutchouc comprenant un composant de caoutchouc, **caractérisé en ce que** une valeur moyenne tan $\delta$A d'une tangente de perte tan $\delta$ de la composition de caoutchouc à -15 °C jusqu'à 20 °C, obtenue en mesurant une tan δ à chaque température de -15 °C jusqu'à 20 °C par paliers de 5 °C sous une condition d'une fréquence de 10 Hz, d'une contrainte initiale de 0,1 %, et d'une amplitude de contrainte dynamique de ± 0,25 %, et en calculant une valeur moyenne de huit valeur numériques obtenues, est de 0,40 à 0,60.

2. Pneumatique selon la revendication 1, dans lequel la valeur tan δA et le rapport de relief R satisfont à l'inégalité (1) suivante :

$$\text{inégalité (1) : } 0,21 \leq \tan \delta A \times R \leq 0,45$$

3. Pneumatique selon la revendication 1 ou 2, dans lequel le composant de caoutchouc comprend l'un au moins d'un caoutchouc à base d'isoprène et d'un caoutchouc butadiène.

4. Pneumatique selon l'une quelconque des revendications 1 à 3, dans lequel une longueur d'au moins une partie en relief dans une direction de la largeur du pneumatique (W) augmente graduellement depuis l'extérieur vers l'intérieur dans une direction radiale du pneumatique.

5. Pneumatique selon l'une quelconque des revendications 1 à 4, dans lequel, quand une largeur de rainure sur une surface de bande de roulement de la rainure circonférentielle placée le plus à l'extérieur quand le pneumatique est monté sur un véhicule est définie comme La, et qu'une largeur de rainure à une position à 95 % d'une partie la plus profonde d'un fond de rainure de la rainure circonférentielle placée le plus à l'extérieur quand le pneumatique est monté sur le véhicule est définie comme $L_{95}$, $L_{95}/L_0$ est de 0,10 à 0,50.

6. Pneumatique selon la revendication 5, dans lequel tan δA et $L_{95}/L_0$ satisfont à l'inégalité (2) suivante :

$$\text{inégalité (2) : } \tan \delta A/(L_{95}/L_{0)} \geq 1,20$$

7. Pneumatique selon l'une quelconque des revendications 1 à 6, dans lequel la composition de caoutchouc comprend 5 à 50 parts en masse d'un composant de résine et/ou d'un plastifiant à base d'ester sur la base de 100 parts en masse du composant de caoutchouc.

8. Pneumatique selon l'une quelconque des revendications 1 à 7, dans lequel la composition de caoutchouc comprend 5 à 150 parts en masse de noir de carbone ayant une taille particulaire primaire moyenne de 25 nm ou moins sur la base de 100 parts en masse du composant de caoutchouc.

9. Pneumatique selon l'une quelconque des revendications 1 à 8, dans lequel la composition de caoutchouc comprend 1 à 10 parts en masse d'un agent de réticulation organique sur la base de 100 parts en masse du composant de caoutchouc.

10. Pneumatique selon l'une quelconque des revendications 1 à 9, dans lequel une valeur tan δA à 30 °C (30°C tan δ) du composant de caoutchouc est de 0,35 ou plus.

11. Pneumatique selon l'une quelconque des revendications 1 à 10, dans lequel un module d'élasticité complexe à 30 °C (30°C E*) du composant de caoutchouc est de 50 MPa ou moins.

12. Pneumatique selon l'une quelconque des revendications 1 à 11, dans lequel une température de transition vitreuse du composant de caoutchouc est de -25 °C ou plus.

13. Pneumatique selon l'une quelconque des revendications 1 à 12, dans lequel un rapport d'une aire totale des rainures circonférentielles (4) sur une aire de contact au sol de la partie formant bande de roulement est de 0,12 à 0,28, et un rapport d'une aire totale des rainures en direction de la largeur (5, 6, 7, 8) sur l'aire de contact au sol de la partie formant bande de roulement est de 0,08 à 0,20.

14. Pneumatique selon l'une quelconque des revendications 1 à 13, dans lequel un rapport d'une aire totale de la partie en relief centrale (2) sur une aire de contact au sol de la partie formant bande de roulement est de 0,30 à 0,65.

**15.** Pneumatique selon l'une quelconque des revendications 1 à 14, dans lequel un rapport d'aire des rainures en direction de la largeur (5, 6, 7, 8) dans la partie en relief d'épaulement (3) est plus grand qu'un rapport d'aire des rainures en direction de la largeur (5, 6, 7, 8) dans la partie en relief centrale (2), le rapport d'aire des rainures en direction de la largeur (5, 6, 7, 8) dans la partie en relief d'épaulement (3) étant une aire totale de toutes les rainures croisant les parties en relief d'épaulement (3) par rapport à une aire totale des parties en relief d'épaulement (3), et le rapport d'aire des rainures en direction de la largeur (5, 6, 7, 8) dans la partie en relief centrale (2) étant une aire totale de toutes les rainures croisant des parties en relief centrales (2) par rapport à une aire totale des parties en relief centrales (2).

# FIG. 1

# FIG.2

**REFERENCES CITED IN THE DESCRIPTION**

**Patent documents cited in the description**

- JP 2012158662 A

- US 20140283966 A1